(19)

**Europäisches Patentamt**
**European Patent Office**
**Office européen des brevets**

(11) **EP 4 517 656 A1**

(12) **EUROPEAN PATENT APPLICATION**
published in accordance with Art. 153(4) EPC

(43) Date of publication:
05.03.2025 Bulletin 2025/10

(21) Application number: 23795829.3

(22) Date of filing: 26.01.2023

(51) International Patent Classification (IPC):
**G06T 7/00** (2017.01)    **G06V 40/12** (2022.01)

(52) Cooperative Patent Classification (CPC):
**G06T 7/00; G06V 10/20; G06V 40/12**

(86) International application number:
**PCT/JP2023/002371**

(87) International publication number:
**WO 2023/210081 (02.11.2023 Gazette 2023/44)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 25.04.2022   JP 2022071985

(71) Applicant: **Hitachi, Ltd.**
**Tokyo 100-8280 (JP)**

(72) Inventors:
• **MIURA Naoto**
**Tokyo 100-8280 (JP)**

• **NAKAZAKI Keiichiro**
**Tokyo 100-8280 (JP)**
• **MATSUDA Yusuke**
**Tokyo 100-8280 (JP)**
• **NONOMURA Yo**
**Tokyo 100-8280 (JP)**
• **KATO Masahiro**
**Tokyo 100-8280 (JP)**
• **NAGASAKA Akio**
**Tokyo 100-8280 (JP)**

(74) Representative: **MERH-IP Matias Erny Reichl
Hoffmann
Patentanwälte PartG mbB
Paul-Heyse-Straße 29
80336 München (DE)**

(54) **BIOMETRIC AUTHENTICATION SYSTEM AND AUTHENTICATION METHOD**

(57)    An authentication system comprises a storage device for storing biometric features, an imaging device for capturing a biometric feature, an image correction unit for converting the image quality of the image captured by the imaging device, and an authentication processing unit. The image correction unit generates an image before color correction of one or more images in which biometrics is captured and transforms the pre-color correction image by a plurality of values within a predetermined search range for color information to generate a plurality of color information transformed images. The image correction unit searches the color information conversion image that best represents the biometric feature for each biometric feature as the optimal color information for each biometric feature from the plurality of color information conversion images.

FIG. 1A

EP 4 517 656 A1

**Description**

TECHNICAL FIELD

This invention relates to a biometric authentication system and biometric authentication method that authenticates individuals using biometric information.

BACKGROUND ART

In recent years, biometric authentication technology has begun to be used not only for access control, such as building access control and PC login, but also for payment authentication for online shopping, etc. In addition, biometric authentication technology is also expected to be used for payment authentication in retail stores. As the use of smartphones for cashless payment increases, the need for accurate authentication is also increasing, and highly accurate biometric authentication technology that can be easily used with smartphones is required.

Currently, biometric authentication methods widely used include face, iris, fingerprint, finger and palm veins, etc. In particular, finger authentication technology based on finger veins, fingerprints, epidermal prints, joint prints, etc. is being widely used in the real world because it can utilize a wide variety of biometric features, provides high authentication accuracy, and is easy to operate. Various types of authentication devices with different sensing methods are used in actual practice, depending on the application. For example, an authentication device that captures high-quality images of a finger inserted through a hole in a device; a small, open-ended authentication device that enables authentication by simply placing a finger on the device; a contactless authentication device that can capture multiple fingers simultaneously by emitting reflected infrared and visible light when multiple fingers are held over the device; and an authentication device that captures color images of fingers in a visible light environment using a general-purpose camera such as the rear camera of a smartphone or the front camera of a notebook PC, etc., are used depending on the application.

Biometric authentication, especially with general-purpose cameras, does not require special equipment and is convenient in that it can be performed at any location for enrollment and authentication. Therefore, if biometric authentication can be achieved with simple operations and high accuracy, it is expected to accelerate the spread of biometric authentication. In addition to ensuring security for general-purpose devices such as smartphones and laptops, if biometric authentication technology can be established between general-purpose devices and dedicated devices, the registration of dedicated devices can be performed on general-purpose devices. For example, if biometric authentication is used for payment at a dedicated device installed at a retail store, the customer would have to go to the store to enroll in the biometric authentication system, whereas in the past, the customer could enroll at home or at any other place at any time using a smartphone. Customers will be able to make payments using biometric authentication at retailers without any special procedures.

However, biometric authentication using a general-purpose camera is subject to the problem that the accuracy of authentication is degraded due to the diversity of the operating environment. Because general-purpose camera authentication uses a visible light color camera to capture biometrics, it is particularly susceptible to ambient light. Examples of ambient light include fluorescent light, sunlight during the day, sunlight in the west, and LED lights (torches) on smartphones. The wavelength and intensity of these ambient lights are different, and the direction in which they are illuminated varies. The color tint and visibility of the biometric feature used for authentication fluctuates due to the wavelength and direction of the ambient light. In order to control the color tint variation, the white balance is generally adjusted automatically to keep the tint constant. For biometric features such as vein patterns that are detected using not only light and dark information but also color differences, the color differences that are useful for detecting vein patterns become less noticeable as a result of the overall image tint. The resulting pattern may be blurred, resulting in inaccurate feature extraction and degraded authentication accuracy. Similarly, if the light source does not illuminate the subject evenly, uneven luminance may occur in the biometric image, and this uneven luminance may be incorrectly extracted as a biometric feature, resulting in a degradation of accuracy.

To solve these problems, it is necessary to develop an authentication technology that can extract stable biometric features regardless of changes in ambient light. However, with previous technologies, it has been difficult to stably extract biometric features in response to environmental conversion, such as adjusting color shades suitable for biometric features in response to changes in the wavelength of ambient light, or extracting features without being affected by uneven luminance on the captured biometrics due to changes in the irradiation position of ambient light.

Thus, the challenge is to provide authentication devices and authentication systems that are less susceptible to changes in the environment in which they are taken while achieving high authentication accuracy.

A conventional technique for biometric authentication that is robust to changes in ambient light is described in Patent Document 1.

CITATION LIST

PATENT DOCUMENT

Patent Document 1: JP 2018-180660 A

SUMMARY OF THE INVENTION

PROBLEMS TO BE SOLVED BY THE INVENTION

In particular, finger-based biometric authentication using a general-purpose camera captures various biometric features such as fingerprints, veins, joint crests, fat crests, and melanin crests in color, and extracts features from the color images for authentication. In this case, in order to properly capture multiple biometric features, it is necessary to take photographs under conditions suitable for each biometric feature. In particular, color balance is important for biometric features based on color characteristics such as veins and joint crests, and the apparent color tone changes depending on the camera parameter settings and the lighting conditions of the biometric capture environment. White balance is often automatically adjusted when capturing biometric using a general-purpose camera. However, there is a problem that when photographing with a non-optimal white balance, biometric features cannot be observed clearly, and the accuracy of authentication deteriorates.

In general, white balance adjustment digitally processes the color information in a RAW image, which is the unprocessed image information directly acquired from a sensor such as a CMOS element installed in a color camera, so that a white object is observed as white under an arbitrary lighting environment. However, the general automatic adjustment of white balance is not always optimal for capturing biometric features. If it is not optimal, the necessary biometric feature information will be corrupted, making it difficult to extract the biometric feature. Therefore, it is important to set the optimal white balance manually, but some cameras may not allow fine adjustment. Similarly, if RAW image information can be obtained, it is possible to generate an arbitrary white balance image. However, not all cameras are capable of capturing RAW images, and even if RAW images could be captured, it is necessary to make various adjustments on one's own, such as demosaicing, noise reduction, lens distortion, and chromatic aberration, in addition to white balance. In biometric authentication using general-purpose cameras, in particular, CMOS sensors and lenses have different characteristics and require optimal customization for each camera. This makes the process more complex and difficult to optimize for each camera. Therefore, in order to work universally with a wide range of cameras, it is necessary to use the image conversion function installed in the camera in advance, rather than processing RAW images directly.

In the case of biometric authentication using multiple biometric features, it is necessary to set the optimal white balance for each biometric feature, such as finger veins, fingerprints, epidermal prints, joint crests, etc. However, if RAW images cannot be handled directly, it is necessary to set the optimal white balance for each biometric feature and take multiple images. It is also assumed that even when the same biometric feature is captured, it may appear clearer if a different white balance is set according to the ambient light conditions. For example, the best white balance setting for various ambient light conditions, such as indoors, near a window, in daylight, at sunset, etc., may be necessary. In addition, the dynamic range of the image may be insufficient in situations where ambient light is strong in some areas, resulting in missing biometric features. In other words, the optimal white balance and color tone correction method differs from feature to feature, and the accuracy deteriorates due to changes in the lighting conditions of the biometric capture environment.

The purpose of the Patent Document 1 is to realize a biometric authentication device that can perform authentication with high accuracy even if the lighting environment or imaging device differs between the time of registration and the time of authentication. For this reason, a technique is disclosed that uses the enrollment information in the memory section to generate a color transformation matrix that minimizes the color difference between the reference biometric image and the representative color of the biometric image during authentication, and uses the generated color transformation matrix to generate a color transformed biometric image for feature extraction. The document mentions a viewpoint of making the two features similar by suppressing the color difference between registration and authentication caused by ambient light changes. However, the document does not mention techniques for color conversion suitable for capturing the biometric features to be used.

The above-mentioned problems are true not only for finger veins, but also for various other biometric authentication systems such as face, iris, auricle, facial veins, subconjunctival vessels, palm veins, dorsal veins of the hand, palm prints, joint prints inside and outside fingers, veins on the dorsum of fingers, subcutaneous fat patterns, melanin patterns, and so on, as well as for multimodal biometric authentication systems combining these biometric authentication systems. Thus, the conventional techniques have various problems that cause loss of accuracy in biometric authentication based on general-purpose cameras, such as deterioration of image quality when shooting with an inappropriate white balance.

The purpose of this invention is to provide a biometric authentication system and a biometric authentication method that can maximize authentication accuracy under various biometric capture environments when realizing biometric authentication based on biometric features captured by a general-purpose camera.

SOLUTIONS TO PROBLEMS

In a preferred example of the biometric authentication system of the present invention, comprising a storage device for storing biometric features, a imaging device for capturing biometrics, an image correction unit for converting the image quality of the image captured by the imaging device, and an authentication processing unit for performing biometric authentication based on the image output by the image correction unit. The image correction unit generates an image before color correction of one or more images in which biometrics is captured, transforms the pre-color correction image transformed by a plurality of values within a predetermined search range for color information to generate a plurality of color information transformed images, selects a color information conversion image that best represents the biometric feature for each biometric feature from the plurality of color information conversion images, and searches the optimal color information for each biometric feature based on the color information to obtain the selected color information conversion image.

EFFECTS OF THE INVENTION

According to this invention, it is possible to achieve highly accurate authentication even when the biometric capture environment is different during registration and authentication.

BRIEF DESCRIPTION OF THE DRAWINGS

Fig. 1A shows the overall structure of the biometric authentication system for Example 1.
Fig. 1B shows an example of the functional configuration of a program stored in memory for Example 1.
Fig. 2 shows an example of a processing flow for example 1, in which an optimal image for authentication is generated from an image taken with an arbitrarily set white balance to highlight biometric features.
Fig. 3A is an example of a neural network for estimating the pre-color correction image from multiple white balance images.
Fig. 3B is an example of the configuration of the training phase of the neural network for estimating the pre-color correction image from multiple white balance images.
Fig. 4 shows an example of the process flow for searching for the optimal color temperature for the extraction of biometric features.
Fig. 5 shows an example of the process flow for searching for the optimal color temperature for Example 1.
Fig. 6A shows an example of the neural network inference process for correcting the luminance gradient caused by ambient light, as shown in Example 2.
Fig. 6B shows an example of the neural network training process for correcting the luminance gradient caused by ambient light, as shown in Example 2.
Fig. 6C shows an example of neural network training data generation for the process of correcting luminance gradient caused by ambient light.
Fig. 6D shows another example of neural network training data generation for the process of correcting the luminance gradient caused by ambient light, as per Example 2.
Fig. 7 shows an example of the process flow of the authentication process for Example 3, in which the effect of wavelength variation of ambient light is reduced by normalizing the ratio of light-receiving wavelength components through spectral processing.
Fig. 8 shows an example of the spectral response characteristics of various ambient light wavelengths and the camera's image sensor for Example 3.
Fig. 9 shows an example of the process flow of the authentication process including guidance for reducing the influence of unwanted ambient light.
Fig. 10 is a schematic diagram showing an example of a method for detecting luminance gradient by ambient light irradiated on a finger, as shown in Example 4.
Fig. 11 shows an example of the process of estimating the irradiation direction of the ambient light component for Example 4.
Fig. 12A shows an example of the guidance display at the start of authentication in the guidance display when ambient light is detected during authentication, according to Example 4.
Fig. 12B shows an example of the guidance display during biometric capture in the guidance display when ambient light is detected during authentication, according to Example 4.

Fig. 12C shows an example of the guidance display when ambient light is detected in the guidance display when ambient light is detected during authentication, according to Example 4.

Fig. 12D shows an example of a user's posture to avoid ambient light based on the guidance display when ambient light is detected during authentication, according to Example 4.

Fig. 13 shows an example of the process flow for searching for the optimal hue for the extraction of biometric features.

Fig. 14A illustrates an example of a method of measuring biometric contrast.

Fig. 14B shows an example of a biometric contrast measurement in vein enhancement processing.

## MODE FOR CARRYING OUT THE INVENTION

The following is an embodiment of the invention with reference to the drawings. The following description and drawings are examples to illustrate the invention and may be omitted or simplified as appropriate for clarity of description. Unless otherwise specified, each component can be either singular or plural.

The position, size, shape, extent, etc. of each component shown in the drawings may not represent the actual position, size, shape, extent, etc. for the sake of ease of understanding the invention. Therefore, the invention is not necessarily limited to the position, size, shape, or extent, etc. disclosed in the drawings.

In the following description, a process performed by executing a program may also be described. The program is executed by a processor (e.g., CPU (Central Processing Unit), GPU (Graphics Processing Unit)) to perform a defined process, using memory resources (e.g., memory) and/or interface devices (e.g., communication ports). The subject of the processing may therefore be a processor. Similarly, the subject of the processing performed by executing the program may be a controller, device, system, computer, node, etc., having a processor. The main body of processing performed by executing the program can be an arithmetic unit, which may include dedicated circuits (e.g., FPGA (Field-Programmable Gate Array) or ASIC (Application Specific Integrated Circuit)) that perform specific processing. The processing entity that executes the program may be an arithmetic unit.

In this document, biometric features are finger veins, fingerprints, joint patterns, skin patterns, ring outline shape, fatty lobule pattern, ratio of length of each finger, finger width, finger area, melanin pattern, palm veins, palm print, dorsal veins, facial veins, ear veins, or face, ear, iris, etc. Biometric features may also be biometric information that refers to anatomically distinct biometric features. A biometric feature may also be biometric information meaning a plurality of features extracted from a plurality of mixed anatomically classified body parts and divided in an arbitrary manner.

This invention makes it possible to achieve highly accurate authentication even when the biometric capture environment for registration and authentication is different. For example, biometrics can easily be used for access control, PC login, and automatic payment at stores, etc. Furthermore, biometric information can be registered using a general-purpose camera such as a smartphone, which is more convenient because it eliminates the need to go to a dedicated terminal for registration and thus increasing convenience. This will facilitate the spread of biometric authentication technology.

[Example 1]

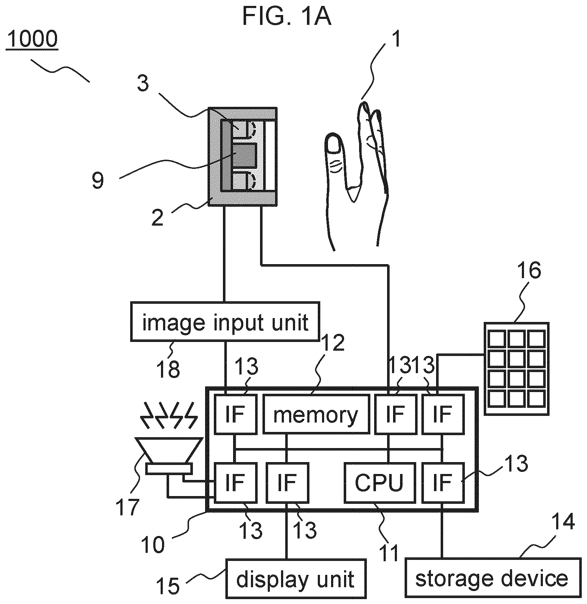

Fig. 1A shows an example of the overall configuration of the biometric authentication system 1000 using biometric features in this example. It goes without saying that the configuration in this example may be configured not as an authentication system, but as an authentication device with all or part of the configuration mounted in a chassis. The authentication device may be a personal authentication device that includes authentication processing, or it may be a finger image acquisition device or finger feature image extraction device that specializes in acquiring finger images while authentication processing is performed outside the device. It may also be implemented as a terminal.

A biometric authentication device consists of at least an imaging unit that takes a picture of biometrics and an authentication processing unit that processes the captured image to authenticate biometrics. An authentication system is a form of authentication processing that uses a device connected by a network to an imaging unit that captures biometrics. The term "authentication system" includes biometric authentication devices and biometric authentication systems.

The example biometric authentication system 1000 shown in Fig. 1A includes input device 2, which is an imaging unit, authentication processing device 10, storage device 14, display unit 15, input unit 16, speaker 17, and image input unit 18. Input device 2 includes an imaging device 9 installed inside the enclosure and may include a light source 3 installed inside the enclosure. authentication processing device 10 is equipped with image processing functions.

The light source 3 is a light emitting device such as LED (Light Emitting Diode) and irradiates light to a certain area of the user presented on the input device 2 as biometrics, for example, fingers 1. Light source 3 may be capable of emitting light at various wavelengths, or it may be capable of emitting light transmitted through biometrics, or it may be capable of emitting light reflected from biometrics, depending on the example. processing device 10. The light sources 3 may be equipped with a function that allows the respective light intensity to be adjusted by the authentication processor 10.

The imaging device 9 captures images of the fingers 1 presented on the input device 2. Imaging device 9 is an optical sensor capable of capturing single or multiple wavelengths of light, e.g., a color camera. The optical sensor may be a monochrome camera or a multispectral camera capable of capturing various wavelengths of light simultaneously, such as ultraviolet or infrared light in addition to visible light. It can also be a distance camera that can measure the distance of a subject, or a stereo camera configuration that combines multiple cameras of the same type. The imaging device 9, like the camera used in a smartphone, for example, has either or both automatic or manual exposure adjustment functions, and either or both automatic or manual white balance adjustment functions. If it has the function of manual white balance adjustment, it has either or both the function of being able to set any color temperature or the function of being able to set several predetermined color temperatures.

The input device 2 may include multiple such imaging devices. Furthermore, fingers 1 may be one or more fingers, and may include multiple fingers on both hands simultaneously.

The image input unit 18 acquires images captured by the imaging device 9 in the input device 2 and outputs the acquired images to the authentication processing device 10. For example, various reader devices (e.g., video capture boards) for reading images can be used as the image input unit 18.

The authentication processing device 10 consists of a computer including, for example, a central processing unit (CPU) 11, memory 12, and various interfaces (IF) 13. The CPU 11 executes a program stored in memory 12 to realize each functional part such as the authentication process.

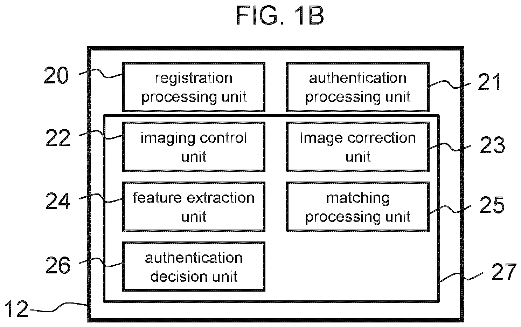

Fig. 1B shows an example of the functional configuration of the program stored in memory 12 to realize each function of the authentication processing device 10.

As shown in Fig. 1B, the authentication processing device 10 has a registration processing unit 20 that pre-registers the biometric features of an individual by linking them to the individual ID (registration ID), an authentication processing unit 21 that authenticates the biometric characteristics extracted by the current image capture based on the registered biometric features and outputs the authentication result, a biometric information processing unit 27 performs image processing and signal processing necessary for biometric authentication. The biometric information processing unit 27 includes a imaging control unit 22 that takes pictures of the presented biometric body under appropriate conditions, an image correction unit 23 that corrects the biometric image to an ideal state so that biometric features can be extracted more stably, feature extraction unit 24, which extracts biometric features while appropriately correcting the body posture during the registration and authentication processes, matching processing unit 25, which calculates the similarity between biometric features, and authentication judgment unit 26, which determines the authentication result from one or more matching process results. These processes will be described in detail later. Memory 12 stores programs executed by CPU 11. Memory 12 also temporarily stores images, etc. input from image input unit 18.

In Fig. 1B, feature extraction unit 24 may be part of image correction unit 23, and authentication decision unit 26 may be part of authentication processing unit 21.

Interface 13 connects the authentication processor 10 to external devices. Specifically, interface 13 is a device with ports for connecting input device 2, storage device 14, display unit 15, input unit 16, speaker 17, and image input unit 18.

Interface 13 functions as a communication unit and allows authentication processing device 10 to communicate with external devices via a communication network (not shown). If the communication network 30 is a wireless LAN, the communication unit is a device that communicates in accordance with the IEEE802.11 standard.

The storage device 14 consists of, for example, a hard disk drive (HDD) or solid-state drive (SSD) and stores the user's registration data and other data. The registration data is information obtained during the registration process and used to match users and is stored in association with a plurality of biometric features for each user. For example, it is image and biometric feature data such as facial features, finger features, finger vein patterns, etc. that are associated with the registration ID as user identification information.

The finger vein pattern image is an image of finger veins, which are blood vessels distributed under the skin of the finger, captured as a dark shadow pattern or a slightly bluish pattern. The feature data of the finger vein pattern consists of data converted into a binary or 8-bit image of the vein area, or data consisting of the coordinates of feature points such as vein bends, branches, and end points, or feature quantities generated from the luminance information around the feature points, or data that has been encrypted and converted into a state that cannot be deciphered.

The display unit 15 is, for example, a liquid crystal display, and is an output device that displays information received from the authentication processing device 10, guidance information of biometrics, and various judgment results.

The input unit 16 is, for example, a keyboard or touch panel, and transmits information input from the user to the authentication processing device 10. The display unit 15 may have an input function such as a touch panel. The speaker 17 is an output device that transmits information received from the authentication processing device 10 in the form of an acoustic signal, such as voice, for example.

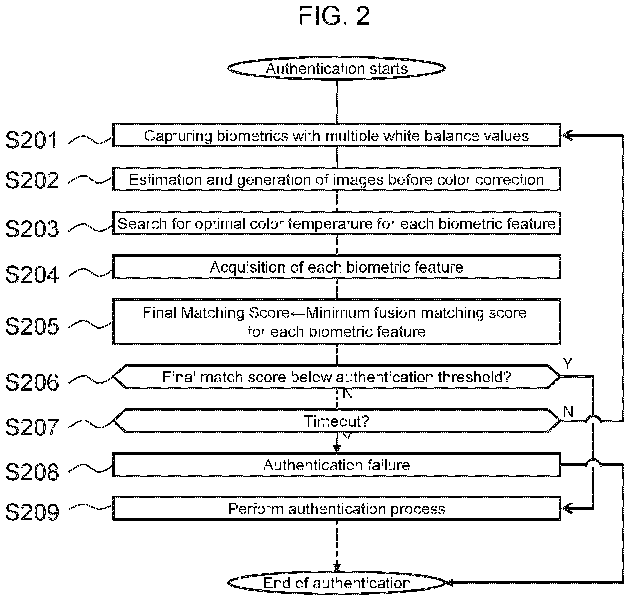

Fig. 2 shows an example of a process flow for generating an optimal image for authentication from images taken with an arbitrarily set white balance and highlighting biometric features. In this example, one or more images with different white balances are taken to properly capture each of the multiple biometric features to be used regardless of ambient light conditions, as well as to determine the optimal white balance and perform color transformation to emphasize the biometric features. This improves the accuracy of biometric authentication for each biometric feature and makes the authentication robust to ambient light changes. The feature extraction unit 24 in Fig. 1B is part of the image correction unit 23 and the authentication decision unit 26 is part of the authentication processing unit 21. The process is explained as follows.

Hereafter, color conversion may be described as the conversion of color information, and "color information" includes "color temperature" and **"hue"**; therefore, the conversion of color information includes the conversion of color temperature and the conversion of hue.

First, imaging device 9 takes multiple images of the user's body with different white balance values (S201). First, it is assumed that the finger vein patterns and joint crests on the fingers are examples of biometric features used for authentication, and in this case, the video image of the entire finger shall be captured. The input device 2 is a smartphone and the imaging device 9 is the rear camera of the smartphone. The light source 3 is a lighting LED or torch attached to the smartphone, which can be turned on to enable authentication in dark environments, but the camera may be left off. The camera shall have an auto-focus function that automatically focuses on the object held up to the camera and an auto-exposure function that corrects the brightness of the subject appropriately. For white balance compensation, which corrects the hue of the image, several predetermined white balance values (preset values) can be set manually, but the image can also be captured by specifying any color temperature. However, in order to increase the versatility of the authentication system, it is assumed here that the function to specify an arbitrary color temperature is not available. The parameter that determines the white balance is the color temperature, generally expressed in Kelvin (K). For example, an image with a color temperature of 2000 K is corrected for bluish tones, and an image with a color temperature of 6000 K is corrected for reddish tones.

The frame rate of the camera shall be sufficiently high, and the position of the subject's fingers shall not change significantly even if multiple images are continuously captured at multiple different white balance values (color temperatures). However, in light of the fact that the subject's misalignment increases if a large number of images are captured continuously, we will assume that three different white balance settings are used here. In addition, as described below, the camera can operate even if only one image is taken with any white balance or with more than three different white balance values.

Next, image correction unit 23 generates the "image before color correction" before the white balance is changed (S202). In this example, the image is converted to a color image before the white balance is changed, i.e., immediately after the CMOS sensor receives the light, based on an adversarial generative network (GAN; Generative Adversarial Network) for the captured biometric image. The image converted to the color image before the white balance is changed, i.e., immediately after the CMOS sensor receives the light, is called the "image before color correction". The details of the conversion method are described below.

The image correction unit 23 then searches for the optimal color temperature for extracting each biometric feature (S203), which is the process of searching for the white balance at which each biometric feature used for authentication is observed more clearly and stably. Here, one or more biometric features used for authentication are actually extracted and matched while arbitrarily changing the color temperature of the image before color correction. This is the process of estimating the optimal white balance at which the biometric features are extracted stably, thus obtaining the optimal white balance value that maximizes the accuracy of authentication.

Then, the image correction unit 23 extracts each biometric feature from the image that has the optimal color temperature for each biometric feature (S204). If feature extraction unit 24 and image correction unit 23 are separately configured, the image correction unit 23 can read out the biometric features from the feature extraction unit 24. Since the biometric features are extracted in the search for the optimal color temperature in the previous step, the results of the search can be reused here.

Then, the matching processing unit 25 performs matching with the pre-registered biometric feature data to obtain the final matching score (S205).

In this example, it is assumed that authentication is successful when two of the maximum four fingers photographed are matched. As an example of matching, the matching processing unit 25 first calculates a match score for each biometric feature by a round-robin of all the registered fingers and all the fingers in the authentication. Then, taking into account the possibility of undetected fingers and false positives, all combinations of registered and authenticated fingers are obtained for the registered E fingers and the V fingers detected during authentication under geometrically consistent constraints, for example, the positions of the index and ring fingers are not inverted.

For example, if E is 4 and V is 3, there are three combinations that pick out 2 from 3 in V, and six combinations that use 4 in E and 2 in V as the matching pair, so all together there are 18 possible combinations. Then, the "finger unit matching score" is obtained for each combination as the matching score for each finger unit. The finger unit matching score can be, for example, a linear combination of the matching score of the finger vein and the matching score of the epidermis, and the matching score of the two fingers can be the average of the two scores. Among the matching scores, the one using a linear combination of the finger vein matching score and the epidermal matching score is specifically called the "fusion matching score". The lowest of the fusion matching scores obtained for all the aforementioned combinations is then referred to as the lowest of the matching scores, specifically the "final matching score".

Then, the authentication processing unit 21 determines that the final matching score is lower than the predetermined authentication threshold (S206), and if the score is lower, the authentication process is performed as authentication success (S209) and ends.

If the final matching score is higher than the predetermined authentication threshold, the AUTHENTICATION PROCESSING UNIT 21 checks whether the authentication timeout period has elapsed (S207).

If the timeout time has not elapsed, authentication processing unit 21 returns to step S201. If authentication is not successful by the timeout time, authentication fails (S208), and the authentication process ends without authentication.

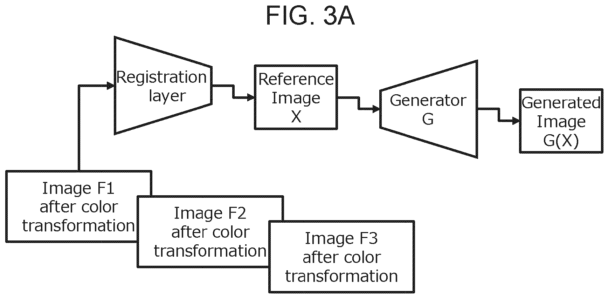

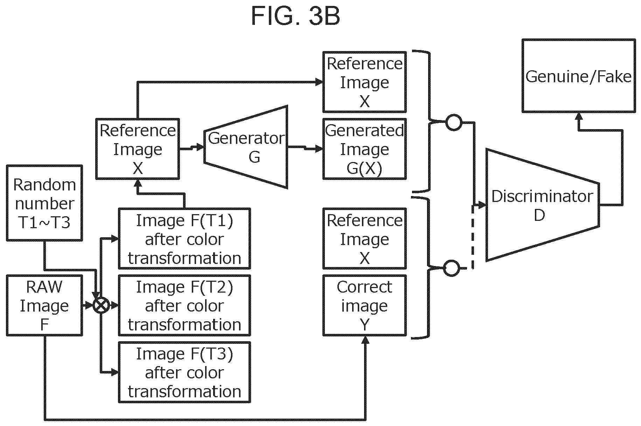

Fig. 3A and Fig. 3B are examples of the configuration of the image correction unit 23, shown in (S202) of Fig. 2, which is a neural network that estimates the image before color correction from images taken with multiple white balances. Since each camera designs its own method of adjusting white balance, the algorithms for such adjustments are generally not publicly available. Therefore, it is difficult to restore the color temperature once the white balance is changed, because the color information of necessary biometric features may be destroyed. In this example, the image correction unit 23 generates "images before color correction" from multiple images taken at different white balances, before changing the white balance using a Generative Adversarial Network (GAN). Here, we describe an example of GAN using pix2pix, which is known as a method that can perform style transformation.

As shown in Fig. 3A, image correction unit 23 performs position correction on the three color-transformed images Fi (F1~F3) captured by imaging device 9 with different white balances so that the registration layer minimizes the misalignment of the multiple images. The pix2pix used in this method generates images based on pairs of training images, and it is known that the accuracy deteriorates if the training images contain geometric misalignments between each other. Therefore, it is important to reduce the misalignment of the subject when multiple images are taken and input. As an example of registration layer-based position correction, the background is first removed by finger area detection, the two images to be corrected are each divided into multiple patches (small areas), and the amount of misalignment between two patches that have the same positional relationship among the two images is estimated using CNN. The amount of misalignment in the x and y directions is then obtained for all patches. It also generates a grid of control points for B-spline transformation of the image in accordance with the patch section. Then, when the aforementioned information on the amount of misalignment is given to these control points and image transformation is performed, a smoothly deformed image can be generated. However, one of the two images shall be used as the reference image and the other image shall be deformed. Similarly, the same process can be applied to the alignment of multiple images to reduce the pixel-by-pixel misalignment in all images.

The reference image X consists of multiple planes so that multiple white balance images can be processed, and in this example, it has the number of planes that can contain three different white balance images. Specifically, it has nine planes to hold three 3-color images. The generator G takes a reference image X containing multiple white balance images as input and generates one pre-color correction image before white balance correction as the generated image G(X). This configuration allows the user to pass three arbitrarily white-balanced images to obtain a color-corrected image.

Fig. 3B shows an example of the configuration of the learning phase of image correction unit 23 in Fig. 3A. In the learning phase, a RAW image F of a living body is captured and a biological image F(Ti) (here i = 1 to 3) that is a white balance (color temperature) of many generated from it. Ti is the color temperature determined by a random number, and the color temperature shall be randomly changed when generating the three color-transformed images. However, the camera used for training data construction shall be capable of acquiring RAW images, and there shall be no geometric deformation between the RAW image F and the many white-balanced images F(Ti). The specific method of converting the RAW image to an arbitrary color temperature will be described later, but generally known methods can be used. This gives three images with randomly changed white balance. These are then set as the reference image X. The three randomly selected color temperatures may have overlap.

The training of a typical GAN alternates between training the generator and training the discriminator. We first describe the learning method for the generator G. Generator G outputs a generated image G(X) when given a reference image X. However, when a pair of reference image X and generated image G(X) is given to discriminator D (described below), the generator G is trained so that discriminator D makes a wrong decision (i.e., judges it as genuine). After training the generator G for a certain number of iterations, the discriminator D stops training the generator G and moves on to training the discriminator D. The discriminator D is trained so that if a pair of reference image X and the generator image G(X) is given, it is false; if a pair of reference image X and the correct image Y (which is the same as the RAW image F) is given, it is true. After a certain number of iterations, the training of discriminator D is stopped, and the training of generator G is started again. As such learning is repeated alternately, gradually the generated image G(X) output by the generator G becomes so similar that it is indistinguishable from the correct image Y.

The same RAW image F is then re-trained by multiplying it by another random number Ti, and then by inputting RAW images F in different postures and in different biometric capture environments, and finally the same training is performed using the biometric images of various subjects. As a result, given any three-white balance-corrected biometric images, the color images before color correction in the RAW image state, i.e., before color correction with the spectral response characteristics of the camera used in the training, can be acquired.

In this example, the network configuration in which three color-transformed images are given is described, but if the number of captured images is known in advance, the number of planes of the reference image X can be adjusted to allow that number of images to be input. If a maximum of five images are to be input, all images can be given the same color temperature when learning, or three of the five images can be given the same color temperature, and the remaining two images can be given different images of the same color temperature. This allows the user to input any number of images from one to five to acquire that color-corrected image without changing the network configuration, especially when multiple white balance images cannot be captured due to slow frame rate or other reasons and only one image is captured, for example. If it is not possible to capture multiple white balance images, especially due to slow frame rate or other reasons, and only one image is captured, for example, five copies of the captured image can be given to obtain the image before color correction. In this case, the advantage is that the desired uncorrected image can be obtained even if only one image is taken at most. On the other hand, if, for example, a reddish image is converted to a bluish image, the image quality may be degraded; therefore, if multiple images with different white balance can be captured and input in a balanced manner, it is better to provide multiple images as input to obtain a high quality image.

In the above, an image of an arbitrary color temperature is generated by another method after obtaining an image of an uncorrected, white-balanced state once from one or more different, white-balanced images. A neural network that directly estimates images of any color temperature may be configured. In this case, in the learning phase, the biometric images of various color temperatures are prepared, and the color temperature is digitally converted from the RAW image in 500K increments from 2000K~7000K, for example, with complete geometric misalignment. In this case, 11 different correct images are given as training data. A large number of reference images X are created with all combinations of these 11 images, three of which are allowed to overlap, and for each reference image X, a further 11 correct images y are paired. Then, a large number of datasets are constructed by creating training pairs in the same way for various body postures and subjects. Training pairs are then created in the same manner for various biological postures and subjects to build a large number of data sets. Then, when pix2pix is trained with these training data, it will be able to generate an image of a specific color temperature by inputting any three white balance images. In this case, it is assumed the image will be converted to obtain 11 different correct images in 500 K increments from 2000 K to 7000 K. Therefore, 11 different pix2pix networks, one for each color temperature of the correct image, will be prepared for training.

In addition, during inference, the user selects a pix2pix network that can output images of the desired color temperature in 500K increments from 2000K to 7000K, and then passes three images of any white balance to generate an image of the specified color temperature.

The advantage of this method is that an image of the specified color temperature can be obtained directly, so there is no need to implement a color temperature conversion algorithm in the authentication process. However, there is a limitation that the color temperature that can be acquired is limited to 500K units in this example. To solve this problem, it is necessary to prepare training data in finer units, or to process the latent vector in the style transformation and design it so that the white balance value changes smoothly. In any case, it can be applied arbitrarily according to the specifications of the system to be designed.

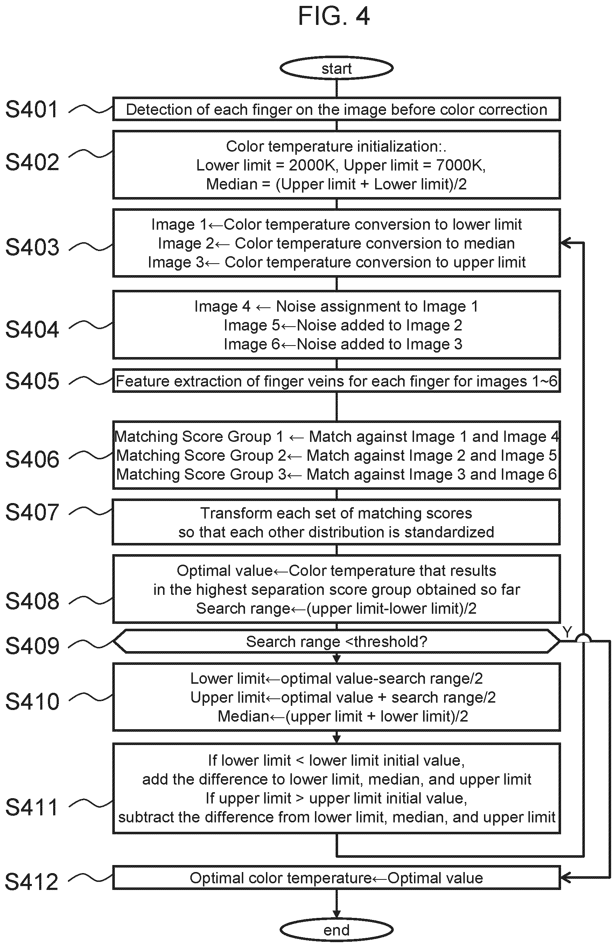

Fig. 4 shows an example of the processing flow of the search for the optimal color temperature for the extraction of biometric features by image correction unit 23, as shown in (S203) of Fig. 2 above. Although this example uses biometric features of finger veins and joint crests (epidermal patterns on the palm side of the finger), the search for the white balance suitable for the vein feature will be explained here. The search for the white balance suitable for the joint pattern can be achieved by replacing the vein with the joint pattern and repeating the process, so the explanation is omitted.

First, the image correction unit 23 performs finger region detection on the images before color correction acquired in the previous step (S401). For finger region detection, for example, deep learning-based segmentation techniques such as Mobile Net v3 can be used to acquire finger regions by providing training data that pairs a hand image with a mask image of the finger region and then acquiring the finger region as a mask image of the finger region for an arbitrary hand image at the time of inference. This method can be applied. At this time, the rectangle information for each finger is also acquired when each finger is enclosed by a rectangle using the results of the finger area detection. The rectangle information for each finger is obtained by determining the fingertip and finger root positions, the finger centerline for each finger from the finger contour lines, and a rectangle that encompasses the fingertip and finger root positions and is coincident with the finger centerline and the frame centerline.

Next, the image correction unit 23 sets the lower limit, upper limit, and median as the initial values of the color temperature value range to be searched as multiple values of the predetermined search range for color information (S402). In this example, images shall be generated with color temperatures between 2000K and 7000K, which are generally covered when general indoor lighting and sunlight are used as ambient light. The lower limit and upper limit are set to 2000 K and 7000 K, respectively, and 4500 K is obtained as the initial median value for these upper and lower limits.

Next, image correction unit 23 converts the above-mentioned image before color correction into an image with the color temperature indicated by the lower, median, and upper values described above to obtain image 1, image 2, and image 3, respectively, as color information conversion images (S403). In this example, the image is changed to any color temperature by a self-designed color temperature change algorithm to convert the color information. The calculation method for converting an image to a specific color temperature can be based on generally known methods, such as using the relationship between color temperature and RGB images based on the color system "CIE1931" of the International Commission on Illumination. For example, if the pixel values representing blue, green, and red in the image before color conversion are expressed as {b, g, r}, the color temperature of the ambient light at which the image was taken before conversion is expressed as Torg, the color temperature to be converted is expressed as Tdst, and the coefficients are expressed as $\alpha$b(Torg, Tdst) and $\alpha$r(Torg, Tdst), the pixel values of the image after conversion {b', g', r'} can be described as follows.

$$b' = b * \alpha b \ (Torg, Tdst)$$
$$g' = g$$
$$r' = r * \alpha r \ (Torg, Tdst)$$

For example, if the color temperature Torg of the biometric capture environment is 6500 K and the color temperature Tdst to be changed is 5000 K, it is known that $\alpha$b (Torg, Tdst) and $\alpha$r (Torg, Tdst) are about 0.74 and 1.29, respectively. Thus, a table of coefficients $\alpha$b and $\alpha$r can be prepared in advance to convert the color temperature of the image. Since the color temperature of the biometric capture environment is often unknown, the color temperature can be fixed to a value such as Torg=5000K, for example.

Then, image correction unit 23 generates images 4, 5, and 6 by superimposing random noise on images 1, 2, and 3 (S404). The random noise is, for example, additive Gaussian noise, which can change the image quality by multiplying noise to the extent that it can actually occur. However, the random noise assigned to image 1, image 2, and image 3 shall be exactly the same. The same effect can be obtained by using two images taken consecutively in time instead of applying random noise.

Next, the image correction unit 23 performs feature extraction of veins for each finger in the acquired images 1 to 6 (S405). In one specific example of feature extraction, veins can be emphasized by first cropping the image on a finger-by-finger basis based on the rectangle information for each finger described above, and then subtracting the green and blue components from the red component of the image. The veins are then enhanced by subtracting green and blue from red in the ratio of 2.0*r' - 0.8*g' - 0.2*b' to darken the vein areas, followed by sharpening the vein line patterns through a spatial feature enhancement filter such as an unsharp mask. The center line portion of the dark line pattern is extracted from this image using a commonly known method, and the result is binarized or trinarized to obtain vein features. The joint crest features can be obtained by averaging the green and blue components of the image to obtain an image of the surface skin pattern, and then extracting the epidermal line pattern after emphasizing the epidermal features with an unsharp mask, etc. in the same way, and then binarizing or trivaluing the image.

The image correction unit 23 then performs a run-through matching using the vein features obtained from all the finger images (S406). The image correction section 23 may be configured to instruct the matching process section 25 to perform the matching and obtain the results. In the round-robin matching, first, for the finger vein patterns of each finger extracted from images 1 and 4, which are the color temperatures indicated by the lower limit, a match between the same fingers (the individual matching) and a match between different fingers (the others matching) is performed, and the result is the matching score group 1. In this example, since four fingers are basically used for authentication, a total of four identity matches are performed since the identity match is performed between the same fingers in images with different random noises. The score distribution for the identity match is referred to here as the identity distribution and the score distribution for the stranger match is referred to as the stranger distribution. Similarly, the same process is applied to the images of the color temperatures indicated by the median and the upper limit to obtain the matching score group 2 and the matching score group 3. These brute-force matches reveal the stability and clarity of pattern extraction due to the effects of random noise. In other words, when comparing the distribution of matching scores for images at one color temperature with the distribution of matching scores for images at another color temperature, the further the distance between the score distribution for the genuine matching and the score distribution for the impostor matching, the more accurate the authentication. In other words, the color temperature at which the biometric feature can be acquired stably.

In the stranger matching process, the number of combinations can be increased by geometrically inverting left/right or up/down for each finger to pseudo-generate different patterns, thereby obtaining a more reliable stranger distribution. It goes without saying that the number of fingers to be matched is not limited to the numbers mentioned above and can be changed according to the application.

Then, the image correction unit 23 normalizes the score distributions so that the stranger distribution becomes the standard normal distribution for each matching score group (S407), respectively, so that the mean of the stranger distribution for any of the matching score groups is 0 and the variance is 1. Therefore, the degree of separation between the genuine score distribution and the impostor score distribution can be ascertained by comparing the genuine score distributions and the impostor score distribution.

Here, the image correction unit 23 selects the image in which the biometric feature is best represented for each biometric feature; specifically, the degree of separation is measured by the mean value of the identity distribution, and the absolute value of this mean value is judged to have a higher degree of separation, that is, a higher authentication accuracy. The color temperature of the image that produces the highest matching score group with the highest degree of separation including the previous loop processing is acquired, and the color temperature that produces the image in which the biometric feature is best represented for each biometric feature is set as the optimal value as the value in which the biometric feature is best represented for each biometric feature (S408). Also, set the search range to half the difference between the current upper and lower limits. The search range defines the range of color temperatures to be searched for in the next loop of the processing flow and is reduced by half each time the loop is repeated. This allows the search range to be gradually narrowed down, and detailed color temperature search can be performed with as few iterations as possible.

When the search range becomes smaller than the predetermined range, the image correction unit 23 judges that the color temperature has been sufficiently narrowed down and terminates the search for the optimal value. Therefore, it determines whether the search range is smaller than the threshold value (S409), and if so, the current optimal value is used as the final result (S412) and the search is terminated. If not, the currently optimal color temperature is set as the median value and the upper and lower limits are set around it (S410).

However, if the lower limit is lower than the lower limit of the initial value that was originally set, the image correction unit 23 adds the amount below to the lower limit, median, and upper limit, and similarly, if the upper limit exceeds the upper limit of the initial value, it subtracts the amount of the increase from the lower limit, median, and upper limit (S411). The color temperature conversion process (S403) is then performed again. In the second and subsequent iterations, however, the color temperatures for which the separation has been calculated in the past may be included, in which case the processing results are reused to reduce the amount of calculation. Although we have used an example here where the search range is halved with each loop iteration, the search range can be narrowed by reducing the search range for each loop, for example, by one-third or one-fourth.

The above process allows the image correction unit 23 to find the optimum value while gradually narrowing the range to search for the optimum color temperature, which contributes to faster processing speed. However, if calculation speed is not an issue, the optimal color temperature may be searched for based on the judgment criteria described above while covering a fixed interval of color temperatures.

If there are multiple biometric features to be used for authentication, for example, if joint crests are used, the optimal color temperature for the joint crests can be searched again while extracting and matching the joint crests, and the matching accuracy for each can be improved using biometric images with multiple different color temperatures. Similarly, when three or more biometric features are used for authentication, it goes without saying that the same process can be repeated for as many biometric features as there are biometric features.

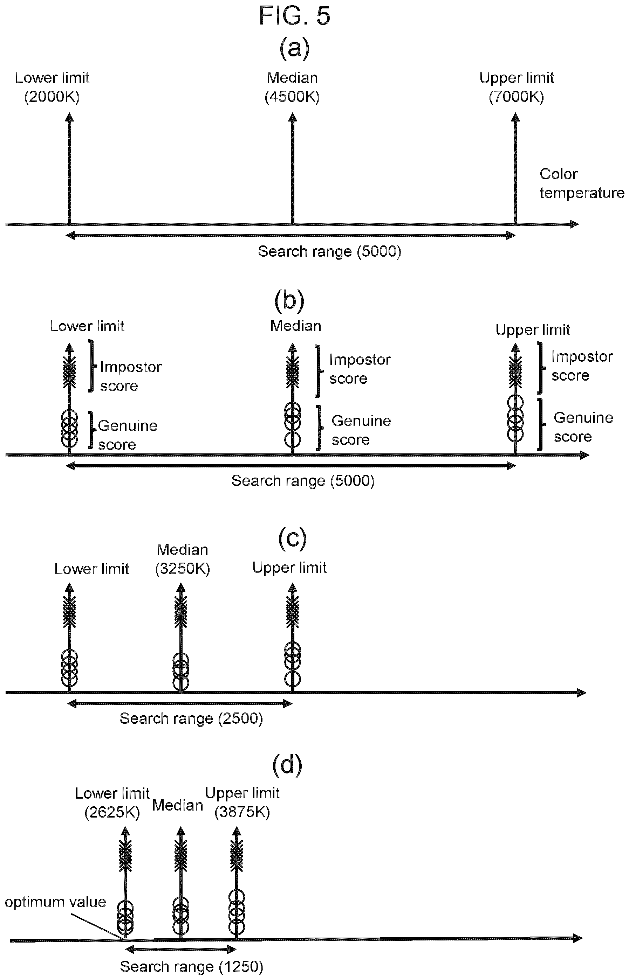

Fig. 5 shows an example of the optimal color temperature search by image correction unit 23 shown in Fig. 4 above. Fig. 5(a) shows the initial state of the search for the optimal color temperature. In this example, the optimal value shall be searched from 2000K to 7000K. Horizontal axis indicates color temperature. The lower limit of the range to be searched is 2000 K, and the upper limit corresponds to 7000 K. First, the median of the range, which is the midpoint of this range, is determined; here, the median value is 4500 K.

As shown in Fig. 5(b), images at the color temperatures indicated by the lower limit, median, and upper limit are acquired by the procedure described above, and the genuine score distribution and impostor score distribution are calculated. The vertical axis in the figure shows the matching score, where X means the impostor score and ○ means the genuine score. The impostor score distribution is standardized, so they are distributed in the same position at any color temperature. In this example, the mean value of the standardized genuine score calculated from the 2000 K image is distributed at a lower value than the other color temperatures, which means that the 2000 K color temperature is the most suitable color temperature for authentication among these three-color temperatures.

Next, as shown in Fig. 5(c), the new lower, median, and upper limits calculated with the search range set to half of the previous one are 2000K, 3250K, and 4500K, respectively, which are the result of performing step (S411) in addition to step (S410) in Fig. 4. Suppose that after obtaining a group of normalized score distributions for 3250K that had not been calculated in the past, 3250K was the most distant from the mean of the genuine score distribution himself from the impostor score distribution. In this case, by the above and the step (S410) in Fig. 4, the lower and upper limits are obtained as shown in Fig. 5(d), with 3250K, which had good separation, as the range center, resulting in 2625K, 3250K, and 3875K. Similarly calculating the score distribution group for the unaccounted color temperatures shows that 2625 K, the lower limit of the range, has the best separation. If the threshold value for the search range is set at 1000, the search range is 1250 at this point, but the search is terminated at this point because it will be half of 625 when the next loop is started. As a result, 2625 K is finally found to be the best color temperature.

If the optimal color temperature is known in advance, it is acceptable to always shoot at that color temperature. However, since the optimal color temperature may differ depending on the environment in which the image is taken, this method is effective in dynamically detecting the optimal value during the authentication process, even when ambient light fluctuates.

Although the above example describes the search for the optimal value of the color temperature of an image, it is also possible to appropriately correct the "hue" of an image in the same way; that is, the color temperature conversion in Fig. 4 can be read as a hue conversion, and the process (S403) related to color temperature conversion can be changed to, for example, the following process.

First, level correction is performed on the resulting B/G/R color plane image prior to color correction, which converts the minimum and maximum values of the image luminance histogram distribution to zero and maximum values (255 for 8-bit gradation) of image luminance, thereby maximizing the dynamic range of each color. The image is then converted to an HSV image, and the saturation is maximized, which emphasizes the color features in the image, and a hue transformation is performed on this image. Hue is generally represented as a hue ring and can be expressed as an angle from 0° to 360°. If the hue of the previously given image before color correction is considered to be 0°, the optimal hue is between 0° and 360°. Therefore, we can generate Image 1, Image 2, and Image 3 by three different hue transformations with the initial lower limit, upper limit, and median values of 0°, 360°, and 180°, respectively, in the search process in Fig. 4. Note that the x° hue transformation means that the hue of each pixel is rotated by +x° from the current state. For example, a red (color code #FF0000) is converted to green (color code #00FF00) by performing a 120° hue transformation. By executing the processing flow in Fig. 4 in this way, the optimal hue can be obtained.

Since hue transformation can change the color tone more significantly than color temperature transformation, it has the potential to significantly improve the contrast of biometric features, i.e., biometric features can be obtained stably, which is expected to improve authentication accuracy and tolerance to environmental variations.

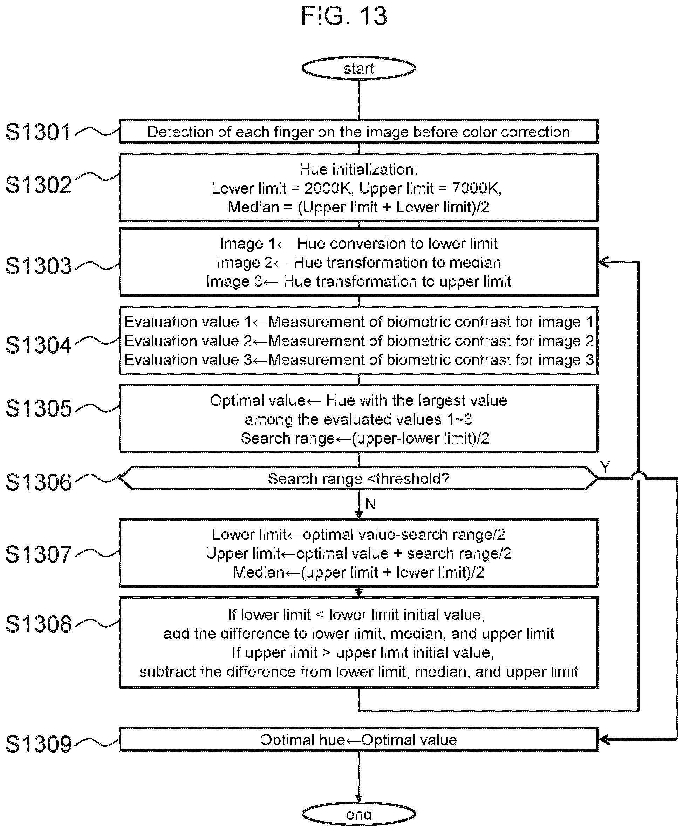

Fig.13 shows another example of the processing flow of image correction unit 23, which searches for the optimal hue or color temperature for extracting biometric features. The method shown in Fig. 4 was an example of searching for the optimal hue by matching multiple different fingers. The example described below can be applied even when multiple fingers are not photographed because it does not involve matching processing for each finger, and it is effective in terms of speeding up the processing speed.

First, finger area detection is performed on the image before color correction acquired in the previous stage of processing (S1301), initial hue values for the median, lower limit, and upper limit are set (S1302), and hue conversion to each hue is performed (S1303). These methods are similar to those shown in Fig. 4 and are not explained.

Next, the biometric contrast is measured for each image to obtain an evaluation value for each (S1304). Specific processing examples are described below. Then, the hue with the largest contrast evaluation value is retained as the optimal value to determine the search range (S1305). Thereafter, the search range is thresholded (1306), the lower, upper, and median limits are updated (S1307), the lower, upper, and median limits are corrected (S1308), and the optimal hue is determined. These processes are similar to those in Figure 4, so we omit the explanation. Here, the optimal hue is the value of the hue that best expresses the biometric feature for each biometric feature.

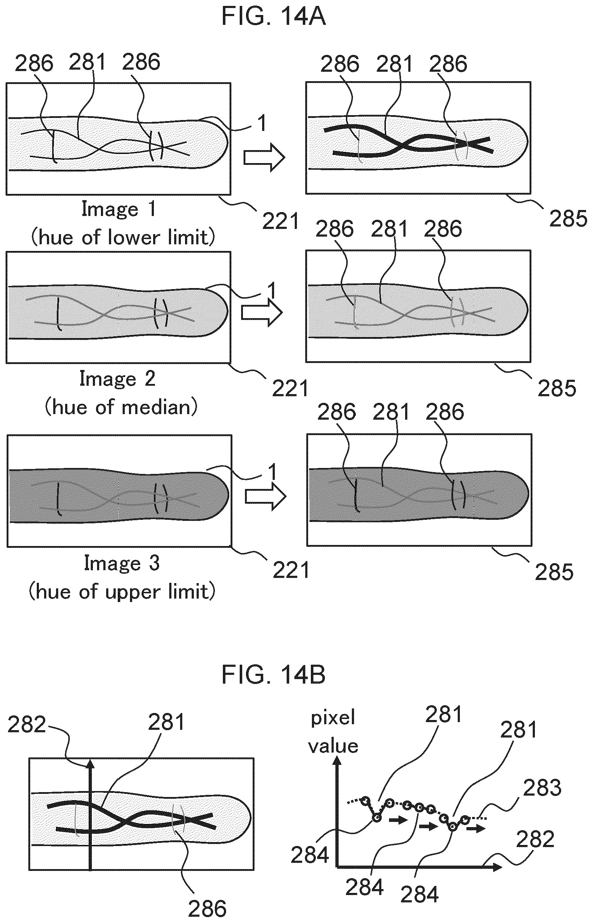

Fig. 14A illustrates an example of the biometric contrast measurement method shown in the process (S1304) of Fig. 13. For each of image 1, image 2, and image 3 with three different hue or color temperature conversions, the ROI (Region of Interest) image 221 of fingers is a different shade of finger 1. The appearance of vein 281 and joint wrinkle 286 is also expected to differ from each other, with veins appearing clearer and joint wrinkles appearing clearer. In this case, we assume that the biometric feature we want to emphasize is vein 281, and an example of how to measure and maximize vein contrast is described below. First, the vein enhancement process described below is applied to the image immediately after hue transformation (left side of the figure) to obtain the biometric feature-enhanced image 285 shown on the right side of the figure. The image after hue transformation shown on the left is a color image. The biometric feature-enhanced image 285 in this example is a grayscale image to simplify processing.

Here, an example of the vein enhancement process described above is described: First, for each B/G/R color plane of a color image, luminance correction is performed so that the average luminance value of each plane is matched. For example, one method to adjust the average value of each color plane to 64 is to first determine the current average value for each color plane, then divide the luminance value of each pixel by the current average luminance value and multiply it by 64. Next, the luminance values of the B/G/R color planes of the image are used to fuse the color planes so that the veins are most emphasized. Where the pixel values of the B/G/R color planes are Fb, Fg, and Fr, and $\alpha$ and $\beta$ are parameters of $0 \le \alpha, \beta \le 1.0$, the vein-enhanced image expressed as $Fr - \alpha(\beta Fr + (1-\beta)Fg)$ is acquired. For example, if $\alpha$ and $\beta$ are varied in increments of 0.1, 11 different values are possible for each, resulting in 121 different images. This formula is a transformation that clarifies only vein patterns by subtracting blue and green images, in which epidermis and joint wrinkles are easily visible, from red images, in which vein patterns are easily visible, thus enabling vein enhancement. Here, we describe a method for obtaining the optimal values of $\alpha$ and $\beta$.

Fig. 14B shows an example of biometric contrast measurement in vein enhancement. The vein-enhanced image when $\alpha$ and $\beta$ are varied as described above shows the veins and joint wrinkles in various ways depending on the values of $\alpha$ and $\beta$. If an image cross-section 282 is set as shown in the figure, a cross-sectional luminance profile 283 of the image, which is the luminance curve that exists on this cross-section, can be obtained. Since vein patterns generally run horizontally, if image cross-section 282 is set in the vertical direction, many veins will cross this cross-section. Here, vein 281 crosses this section in two places, and the cross-sectional luminance profile is darker where vein 281 is present, indicating a depression below the vein at the location of the vein. In this example, a biometric contrast detection probe 284 is set up to detect this depression. This is a virtual probe that calculates the curvature of the luminance profile curve and the difference between the luminance values at the three locations. This probe has three circles and has the function of doubling the pixel value in the center circle position and subtracting from it the pixel values in the left and right circles positions, respectively. The distance between the three circles is always assumed to be equally spaced and is set according to the typical width of a vein. If the result of this calculation is negative, the luminance profile curve is convex downward, meaning that a vein is present at that location, and a smaller value means that the profile curve forms a deep valley, meaning that a vein of high contrast is present. The above calculation is performed by shifting the position of the probe by one or several pixels, and the absolute value is obtained by summing the results of the calculations when the result is negative. This allows us to determine how many veins are present and how high the contrast is in this cross-sectional luminance profile, which can be calculated and summed for any longitudinal image cross section at any location within the area of the fingers 1 to quantitatively determine the contrast intensity of veins running horizontally.

Similarly, if the image cross-section is set horizontally and the same process is applied to the cross-sectional brightness profile of the entire finger region, the contrast intensity of the joint wrinkles that tend to run vertically can be obtained. The distance between the three circles of the biometric contrast detection probe 284 should be adjusted to the width of the joint wrinkles.

Next, the contrast intensities of the vein and joint wrinkles obtained above are fused to obtain the contrast evaluation value. One way to obtain the contrast value is to subtract the contrast intensity of the joint wrinkles from the contrast intensity of the veins. The same effect can also be obtained as a method that searches for conditions where joint wrinkles are least visible by focusing only on the contrast of joint wrinkles. In this case, for example, the contrast intensity of joint wrinkles is subtracted from the fixed value to find the maximum value. By obtaining $\alpha$ and $\beta$ when the evaluated value is maximized, the contrast intensity of the veins is maximized, and the contrast intensity of the joint wrinkles is minimized. This allows us to obtain an image in which only the veins are enhanced.

The contrast evaluation values for the optimal $\alpha$ and $\beta$ obtained by the method described above are the contrast evaluation values for the hue image, and the contrast evaluation values for each of image 1, image 2, and image 3 shown in Fig. 14A are extracted as evaluation value 1, evaluation value 2, and evaluation value 3, respectively (S1304) and selecting the hue when these values are maximized, the search for the optimal hue becomes possible.

In the above description, the process of enhancing veins was explained. Similarly, when enhancing joint wrinkles, the positions of veins and joint wrinkles should be switched and the evaluation value maximized as the method of taking the evaluation value of contrast described above. In the example above, Fr - $\alpha$ ($\beta$Fr + (1-$\beta$) Fg) was obtained as the enhancement process for the living body, but a simple subtraction may not eliminate the information to be removed. In contrast, a subtraction process can be performed on the log image, for example log (Fr) - $\alpha$ ($\beta$log (Fr) + (1-$\beta$) log (Fg)). This has the advantage of improving the robustness against the occurrence of luminance gradients because uneven luminance within the finger region is homogenized, as well as enabling enhancement processing that is compatible with the physical absorbance characteristics of veins and joint wrinkles.

As described above, this example can convert a captured biometric image to an image before color correction, even if the white balance has been set to an undesired value due to camera settings. In addition, this example can automatically determine the optimal color temperature or hue for each biometric feature, thereby improving authentication accuracy and tolerance to environmental variations. This can improve the accuracy of authentication and tolerance to environmental variations.

It should be noted, however, that some types of general-purpose cameras are capable of setting arbitrary color temperatures and changing the white balance, in which case it goes without saying that images of arbitrary color temperatures can be acquired directly from the camera and the search for the optimal color temperature described above can be performed without the generation of images before color correction as described above. This method is effective from the viewpoint of improving versatility, since it is important to adapt the method to low-functional models in order to accommodate any general-purpose camera.

The image correction unit 23 can also improve image quality on average by acquiring and combining multiple white balance images instead of searching for the optimal white balance. As a specific example, first determine several white balances that can emphasize biological features through preliminary evaluation, and then integrate all images taken at these color temperatures to obtain the dynamic range. As shown in the hue transformation above, the color features are enhanced by correcting the range and maximizing the saturation of each color in the integral image, and by transforming the image to the hue determined by the preliminary evaluation. Although this method does not necessarily provide optimal enhancement for each biometric, it improves the contrast of the biometric on average. Therefore, this method is effective because it is expected to improve the accuracy of authentication and environmental resistance, as well as increase processing speed.

[Example 2]

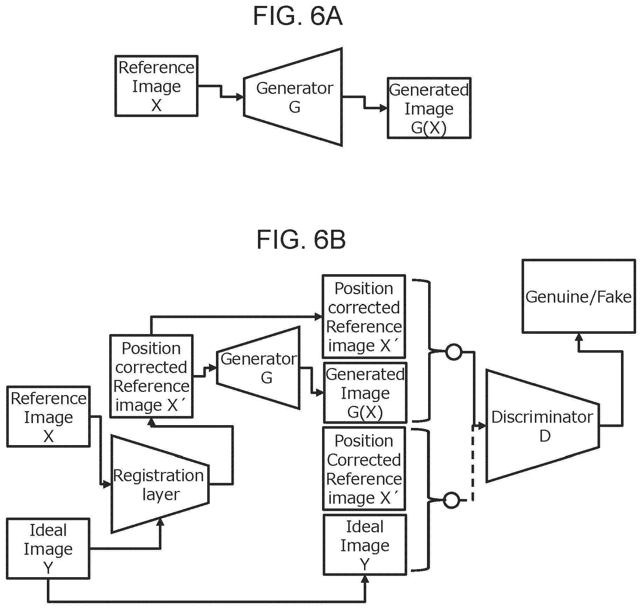

Fig. 6A and Fig. 6B show an example of the processing of the image correction unit 23 to correct the luminance gradient caused by ambient light, for example, which is not caused by biometric features. The above example is a technique to obtain the color temperature or hue that can clarify biometric features most clearly while following ambient light changes. On the other hand, in the above examples, the influence of ambient light not only causes changes in color characteristics, but also induces partial luminance saturation and luminance gradients in the bio-images, which may lead to accuracy degradation. While overall luminance saturation can be easily resolved by exposure control, luminance gradient cannot be resolved by simple exposure control.

The term "luminance gradient" refers to the state in which there is a large irregularity in the irradiation intensity of ambient light. For example, when a subject is illuminated by strong sunlight near a window, one side of the subject is illuminated particularly strongly, resulting in irregular gradations in the brightness of the subject. If the subject has irregular irregularities or gradient, the areas of uneven luminance may be mistakenly extracted as biometric features. Therefore, it is desirable to remove the luminance gradient as much as possible before extracting the biometric features.

In some cases, uneven brightness or gradients may cause luminance saturation and non-luminance saturation areas to coexist in a biometric image. This can be resolved by applying HDR (High Dynamic Range), a dynamic range improvement technology, but HDR does not resolve the luminance gradient itself.

Fig.6A shows an example of GAN configuration of image correction unit 23 to remove luminance gradient. Here, pix2pix shall be used, and the configuration is similar to that shown in Figure 3 above. The reference image X is a finger image taken under arbitrary ambient light, and the generated image G(X) is obtained through the generator G. The generated image G(X) is trained to generate a finger image taken under an ideal environment.

Fig. 6B shows an example of the learning phase of image correction unit 23, which learns Fig. 6A. Ideal environment Y is a finger image taken in an ideal environment such as indoors, and reference image X is the same finger image taken in an arbitrary environmental luminance such as indoors, indoors in a different lighting environment, near a window, outdoors during the day, outdoors in the evening, etc. First, the reference image X and the ideal image Y are input to the registration layer as a pair image, and position correction is performed so that the reference image X matches the ideal image Y pixel by pixel in the same way as in the example above to obtain a position-corrected reference image X that has the same shape as the ideal image Y. However, the position correction process may be performed for all training data in a batch process in advance. Then, the generator G and discriminator D are trained, but these procedures are the same as in Figure 3, so we omit the explanation. This learning process transforms a finger image taken in an arbitrary environment into an image taken in an ideal environment, thereby suppressing the occurrence of luminance gradient.

This process can be combined with the authentication process flow described in Fig. 2 in the aforementioned example, for example, immediately after the process (S201) of capturing biometrics with multiple white balance values, to achieve authentication processing with even less ambient light influence.

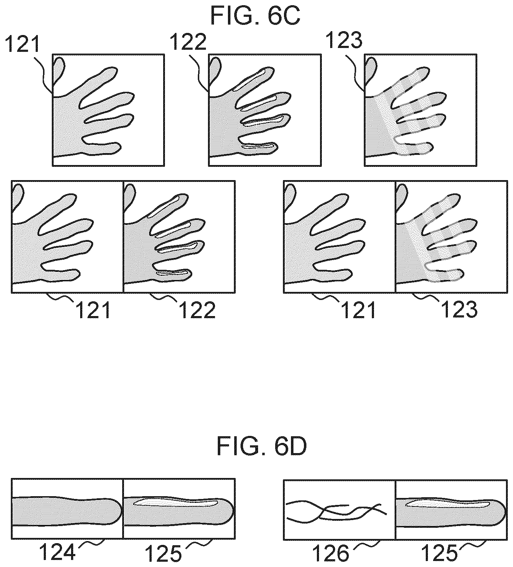

Fig. 6C shows an example of training data generation. First, finger image indoors 121 taken in an ideal environment with almost no tilt, finger image at the window 122, in which the same finger is taken at the window, and finger image with shading 123, taken with light and dark shadows projected onto the fingers due to blinds hung near a window, etc. In addition to this example, it is desirable to capture images by many subjects in a variety of environments. At this time, it is desirable to erase the background by the finger area detection process because registration becomes difficult if various subjects are reflected in the background of the fingers. However, as described below, some methods allow learning even if the background is included, so any of these methods can be used.

Next, the ideal image finger image indoors 121 and the finger image at the window 122 are paired as training data. Similarly, an ideal image, a hand image 121 indoors, and a hand image 123 containing shadows are paired as training data. The former is the ideal image Y, and the latter is the reference image X, and are input to the training network configuration.

If it is possible to continuously generate paired images using a dedicated imaging device 9 that can instantly switch between the indoor and window environments to avoid pixel-by-pixel misalignment, the registration layer in Fig. 6B can be eliminated. When using registration layers, one method to precisely align the geometrical deformations between the two images is to use the texture of the epidermis, which has a fine spatial pattern and is a useful feature to compensate for small misalignments. The epidermal features are then enhanced by image enhancement filters and input to the registration layer for more precise alignment.

Fig. 6D shows another example of training data generation. Although the above shows an example of converting a finger image to an ideal image, for example, a finger ROI image can be generated by cropping an image with a constant normalized finger angle and finger width for each finger and filling in the background, and then generating pairs with different shooting environments for this finger ROI image to generate a training pair image for each finger image. Here is an example of a paired finger ROI image 124 indoors and a paired finger ROI image 125 near a window. When cropping by finger, registration is relatively easier than in the case of whole fingers, and since unnecessary image areas are not included, improved image quality and processing speed after conversion can be expected.

Similarly, an ideal biometric feature pattern extracted from a biometric image taken under an ideal environment can be obtained in advance, and the original finger image taken in an arbitrary environment and the ideal biometric feature pattern can be used as the training pair image so that this ideal biometric feature pattern can be obtained under any biometric capture environment. Here is an example of, a finger vein pattern 126 extracted from finger image in an ideal environment, indoors, paired with a finger ROI image at the window 125. If such a pair as training data is set up, the ideal biometric feature pattern can be directly obtained in any biometric capture environment. Therefore, the conversion to the ideal environment image and the feature extraction process can be combined, and the processing cost can be reduced.

The method for estimating the ideal image with the entire finger image, exemplified in Fig. 6C, is to fill in the background of the finger. If the images of windows and blinds in the background are also left as they are, information on the biometric capture environment will be included in the image. Therefore, it may be assumed that the ideal image can be generated with higher precision. One method for converting the image to the ideal image while leaving the background information intact is to use Cycle GAN, which does not assume pixel-by-pixel image matching, does not require registration, and has the advantage of allowing the collection of training data relatively freely. Therefore, Cycle GAN may be used.

[Example 3]

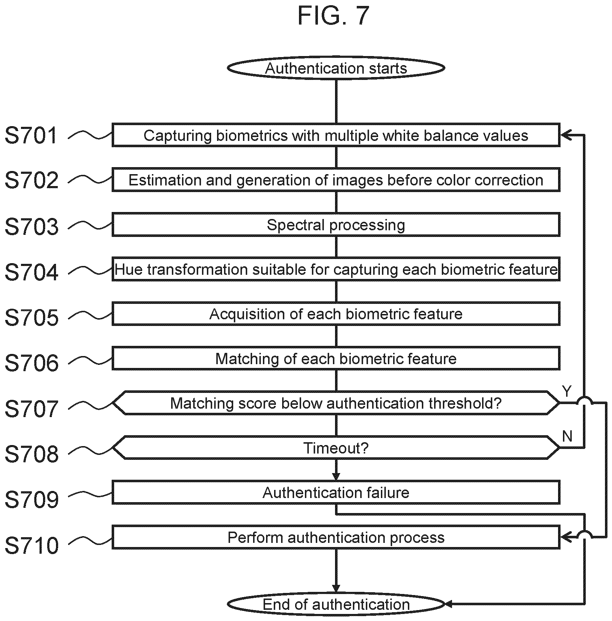

Fig. 7 shows an example of the process flow of the authentication process that reduces the effect of wavelength variation of ambient light by normalizing the ratio of light-receiving wavelength components through spectral processing.

Since this processing flow is generally equivalent to that shown in Fig. 2 in the example above, we omit the explanation of equivalent processing.

First, imaging device 9 captures the biometric with one or more white balance settings (S701), as in the example above, for example, it can capture the biometric with three different white balance settings, or it can capture the biometric with one white balance setting or three or more different white balance settings, depending on the automatic white balance setting, etc.

Next, as in Fig. 2, the image correction unit 23 estimates and generates the image before color correction (S702).

Next, spectral processing is performed by the image correction unit 23 (S703), which converts the signals (pixel values for each B/G/R color) received by the CMOS sensor or other image sensor of the camera into light intensity for each wavelength.

Then, the image correction unit 23 performs a hue transformation suitable for capturing each biometric feature (S704) and acquires biometric features from those images (S705).

The hue conversion (S704) can be performed as described in the above example, using the processing in Fig. 2 (S203), and the example in Fig. 4 where the color temperature is read as hue for the color temperature search. The acquisition of biometric features (S705) can be performed in the same manner as shown in the process (S204) in Figure 2. Next, the image correction unit 23 then performs matching of each biometric feature (S706), or the image correction unit 23 can be configured to instruct the matching processing unit 25 to perform the matching and obtain the results.

The authentication processing unit 21 judges whether the matching score is below the preset authentication threshold (S707), and if the score is below the authentication threshold, it performs authentication processing (S710) and terminates authentication. If not, a timeout judgment (S708) is made, and if the timeout occurs, the authentication process ends with an authentication failure (S709), otherwise, it returns to the biometric imaging (S701). Thereafter, the spectrographic process (S703), which is new in this example, is described in detail.

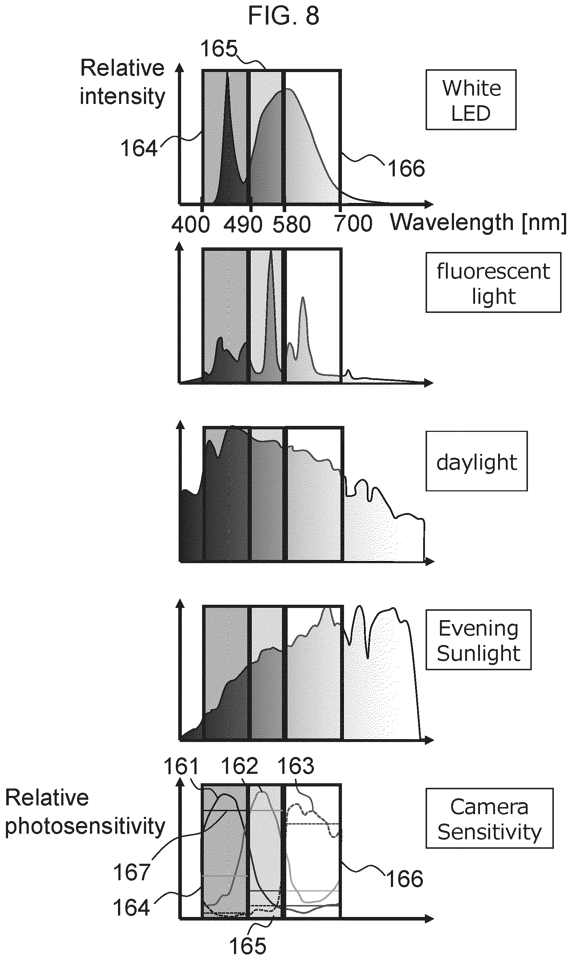

Fig. 8 shows an example of various ambient light wavelengths and the spectral response characteristics of the camera's image sensor. This Figure 8 is used to explain the spectral process (S703) in Figure 7.

First, the background on spectral processing is explained. The upper and middle rows of Fig. 8, show an example of a typical spectrum of ambient light found in everyday life. For example, white LEDs used for indoor lighting and smartphone flashlights (torches) have a sharp blue peak at around 450 nm and another peak at around 580 nm, while the red component at around 700 nm is rather weak. Similarly, fluorescent lamps have peaks at multiple wavelengths. The spectrum of sunlight varies with the time of day. Daytime sunlight has a generally uniform intensity in blue, green, and red, while evening sunlight has a low blue component but increases in intensity as the wavelength increases. Thus, ambient light has various spectral characteristics. Such changes in ambient light change the coloration of the biometric image to be captured, which in turn changes the visibility of the biometric feature. For example, the epidermis of the palm, one of the living tissues, is a mixture of melanin and blood, and appears to be a mixture of yellow and red due to the absorbance properties of melanin and hemoglobin.

In contrast, veins in the subcutaneous tissue, which are deeper than the epidermis, reflect red, blue, and green in equal amounts because blue and green wavelength components cannot reach them, and appear gray with a bluish tint. When red light is irradiated as ambient light, the epidermis and veins both become red in color and contrast is lost, making it difficult to observe vein patterns, especially in the evening sunlight. Thus, it is assumed that the contrast of biometric features fluctuates when ambient light changes, and the fluctuation of ambient light can be a factor that degrades the accuracy of authentication.

In contrast, if the tint of ambient light is normalized, the tint of the subject can always be maintained constant regardless of differences in the spectrum of ambient light. For example, assuming that the spectral intensity is uniform, including both the color of the subject biometric part and the ambient light, each color can be normalized by multiplying each color by a factor so that the average luminance of each R/G/B biometric site in the captured color image matches. If the ambient light has a low blue component, the average luminance of the R component of the image will be low. Therefore, the coefficients are multiplied to emphasize the R component so that each color component is uniform overall. In this case, the spectrum of ambient light is unknown, but the color of the subject, the human body, is constant if the subject is the same person. Therefore, if the luminance of R/G/B is made uniform in the image area where the subject is observed, the fluctuation in the appearance due to changes in the spectrum of ambient light is eliminated.

However, in general color cameras, the R/G/B colors in an image do not necessarily correspond to the physical wavelengths. A typical color camera has three types of optical elements, R/G/B. The sensitivity characteristics differ depending on the wavelength as illustrated in Fig. 8 as light sensitivity characteristics of element B161, light sensitivity characteristics of element G162, and light sensitivity characteristics of element R163. When light of a certain wavelength is received, each of the R/G/B elements reacts, and the received color can be identified according to the ratio. However, even when light of a single wavelength of blue is captured, the light receiving element R, which mainly responds to red wavelengths, responds slightly. Therefore, the luminance of R is not necessarily due to the fact that the red wavelength was captured; similarly, if only red light is captured, the luminance of B will also increase. Therefore, it is necessary to treat wavelength components more accurately by performing spectral processing so that when blue wavelengths are captured, only the B luminance has a value, and the G and R luminance values do not. For spectral processing, a multispectral camera can be used to spectralize a continuous spectrum. However, since a typical color camera has only three types of color photodetectors, in principle it can spectrate only three wavelengths.

In this example, the average intensity of multiple wavelength bands in the image of color information before color correction is estimated. To make spectroscopy possible with the three types of photosensors in a color camera, three wavelength bands with constant bandwidths are defined, and the average spectral intensity of the three wavelength bands is acquired. In other words, the wavelength band between 400 nm and 700 nm, which can be captured by ordinary visible light cameras, is divided equally, with the wavelength band between 400 nm and 490 nm as the blue wavelength band 164, 490 nm and 580 nm as the green wavelength band 165, and 580 nm and 700 nm as the red wavelength band 166. The wavelength of the light source should be set to avoid accidental spectroscopy, especially if the torch on the smartphone is considered to be lit at all times. In general, white LEDs have a wavelength peak at 450 nm and a peak trough at around 490 nm. In this case, the boundary between the blue wavelength band 164 and the green wavelength band 165 should be set to match the peak trough of the blue wavelength component of the LED. In this way, even if the wavelength peaks are shifted due to variations among models, the blue wavelength component of the LED is less likely to be erroneously spectralized as green. For this reason, the boundary between the blue and green wavelength bands was set here at 490 nm; similarly, the boundary between the green and red wavelength bands was set at 580 nm so that the intensity of the white LEDs is approximately the same.

Next, an example of spectral processing is described, where the signal intensities of the three types of photosensors in a color camera are converted into the average spectral intensities of the three wavelength bands described above. To begin with, if the B/G/R pixel values of the image, which are the signal intensities of the photodetectors, are FB, FG, and FR; the blue/green/red wavelength band average intensities are Ib, Ig, and Ir; and the wavelength band average spectral sensitivity characteristic of photodetector k when light in wavelength band j is received is Wjk, the following formula holds.

$$[FB\ FG\ FR]^T = [[Wbb\ Wbg\ Wbr]^T\ [Wgb\ Wgg\ Wgr]^T\ [Wrb\ Wrg\ Wrr]^T] * [Ib\ Ig\ Ir]^T$$

This is expressed as a matrix as follows.

$$F = W * I$$

Here, to obtain the wavelength band-averaged intensity I, the inverse matrix W-1 of the spectral response characteristic matrix can be obtained. In other words, it can be stated as follows.

$$I = W^{-1} * F$$

This transformation yields the blue wavelength, green wavelength, and red wavelength components, which are the average intensities of each wavelength band. Therefore, the average intensities of multiple wavelength bands in the image before color correction can be estimated. However, the Wbb and other 9 parameters are calculated by the average value of each wavelength band of the spectral response curve of the color camera in Figure 8. For example, the spectral sensitivity of element B in the blue wavelength band varies smoothly between 30% and 45%, but the average of the light sensitivity characteristics of element B in the blue wavelength band 167 is about 40%. and here Wbb = 0.4, and so on.

Thus, the light intensity in the three wavelength bands can be obtained from the R/G/B luminance values of the received image. After that, the effect of ambient light wavelengths can be normalized by converting the light intensities so that the ratio of these intensities remains constant. This normalization is performed by the level correction process for each color in the hue conversion (S704) process in Fig. 7 described in the example above.

It is also possible to roughly estimate the type of ambient light based on the spectral intensities of the wavelength bands mentioned above. For example, daytime sunlight varies greatly in intensity in the blue wavelength band, and if the intensity of the blue wavelength band is clearly stronger than the intensity of other wavelength bands, this indicates that daytime sunlight is being irradiated. Similarly, if the intensity of the red wavelength band is clearly stronger than that of the other wavelength bands, it indicates that evening sunlight is being irradiated. The type of ambient light can be roughly estimated based on the ratio of intensities in each wavelength band. By using this result, for example, it is possible to change the selection of multiple color temperatures for white balance when capturing biometrics, and to generate optimal image quality for each environment.

The specific implementation in the optimal hue transformation (S704) in Fig. 7 in this example is described above; another example is to change the hue so that the images in the blue and green wavelength bands are most different from the images in the red wavelength band, instead of searching for the optimal hue while performing feature extraction and matching. In general, light in the blue and green wavelength bands does not reach the veins in the lower dermis layer and is diffusely reflected, so the light and dark information in these images contains almost no vein characteristics. As mentioned above, veins appear slightly bluish gray because the red component is relatively darker than the blue, but this is only true for images of a specific hue, and can be converted so that the veins appear bright blue or green by freely changing the hue, or so that the red in the vein area becomes darker. The red of the vein areas can also be converted to darker. However, since the position of the veins is unknown information, it is not known in advance which part of the vein should be hue transformed to what color tone. Therefore, taking advantage of the property that none of the images in the blue and green wavelength bands have vein information at physical wavelengths, and adjusting the hue so that the red and blue and red and green images are most different from each other, the vein features in the red wavelength band images.

Since hue transformation is a correction that rotates the three-color tones, the hue can be adjusted in various ways so that the blue and green images also contain vein information, or the red image does not contain veins. For example, if the hue is rotated so that only a few veins are observed in the blue image as well as the red image, information of the veins in the red image are partially missing. Therefore, the veins in the red image are not at their most clearly visible.

Similarly, if the hue is adjusted so that, for example, the red and green images contain veins and the blue image contains no veins, then if the degree of difference between the red and green images and the red and blue images is calculated, the similarity is somewhat higher for the red and green images and the difference is greater for the red and blue images. On the other hand, if the hue is completely set so that veins are present only in the red image, it can be assumed that the blue and green images contain almost no vein features. In other words, the red image should obviously look very different from the blue or green image. In this case, the degree of difference between the red and blue images and the degree of difference between the red and green images are both considered to be maximized. The difference between the red and blue images and the difference between the red and green images are calculated, added together, and the hues are adjusted so that they are maximized. In this way, veins can be observed only in the red image, i.e., vein information is concentrated in the red image. The red image in this condition has the highest contrast vein pattern observable, thus stabilizing vein pattern extraction. In the remaining blue and green images, veins are eliminated, and epidermal features are retained. Therefore, features such as joint crests can be extracted from these images.

Such a method allows two different biometric features to be extracted separately, thereby increasing the accuracy of authentication. In the above example, the vein pattern is enhanced by subtracting the blue or green image from the red image. In this case, the veins in the red image have already been enhanced and there is no need to optimize the parameter settings for subtraction, making this method robust to environmental variations. Normalized Cross Correlation (NCC) and Zero Mean Normalized Cross Correlation (ZNCC) can be used to calculate the degree of difference. Since images in each wavelength band may have different average luminance levels, the latter method of calculating differences that is robust to brightness variations is effective.

If the biometric features can be assumed to have different distributions for each color, for example, independent component analysis (ICA) can be performed on the three color information in the finger region and converted into a new image component that is different from each of the R, G, and B planes. This allows, for example, the conversion of the image into three image planes, hemoglobin, melanin, and veins, which are independent as to color, and the biometric characteristics of each plane can be used for authentication. However, the biometric features obtained by ICA do not necessarily correspond to commonly known biometric tissues. The advantage of using independent biometrics is that they complement each other, so that even if authentication fails for the first biometric component, there is a greater chance that the second or third biometric component can be used to authenticate, which is expected to improve the overall accuracy of authentication.

[Example 4]

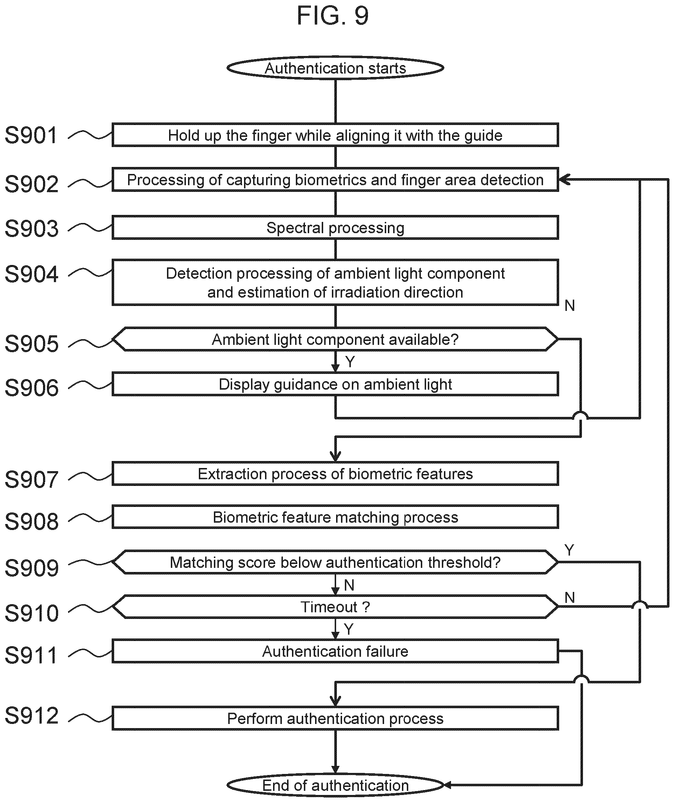

Fig. 9 shows an example of the process flow of the authentication process including guidance to reduce the influence of unwanted ambient light.

First, the user follows the guidance displayed on the screen and holds up his/her finger while aligning it with the guide (S901).

Then, the image correction unit 23 performs the process of capturing biometrics and finger area detection (S902). Then, the image correction unit 23 performs spectral processing (S903), followed by detection processing of the external light component and estimation of the irradiation direction of the external light component (S904). The image correction unit 23 then determines whether ambient light is present (S905).

If ambient light is present, the image correction unit 23 controls the display unit 15 to show guidance to the user that ambient light is being irradiated (S906), and then returns to the process of capturing biometrics (S902).

At this time, when the user confirms the guide to the effect that outside light is irradiating, the user can take pictures of the living body in such a way as to avoid outside light. If the ambient light component is less than the threshold value, the authentication process continues and the extraction of biometric features by the image correction unit 23 is performed (S907).

The authentication matching process (S908) is performed by the authentication matching section 21, and whether the matching score is lower than a certain value is determined (S909); if the score is lower, the authentication process (S912) is performed as an authentication success and the authentication is terminated; otherwise, it checks whether the timeout is appropriate (S910) and returns again to the finger capture process (S902). If the authentication is not completed until the timeout, the authentication fails (S911) and the authentication is terminated.

The explanation of each process in this example is omitted because the methods shown in the above examples can be used as specific processing methods as appropriate. The following describes the detection of ambient light component by the image correction unit 23, the estimation of the direction of illumination (S904), the determination of the presence or absence of ambient light component (S905), and the display of guidance for ambient light (S906), which are new processes.

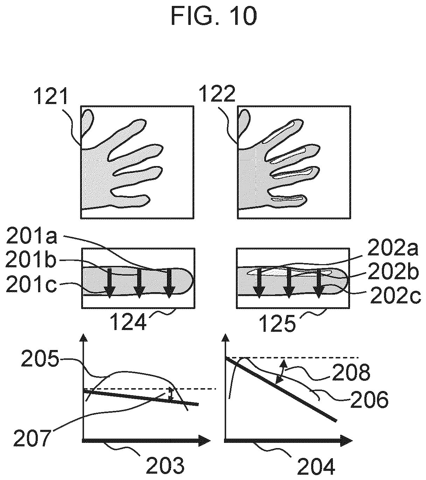

Fig. 10 shows a schematic diagram of the detection method of luminance gradient by ambient light irradiated on a finger as an example of the detection process of ambient light component and the irradiation direction estimation process (S904) of ambient light component shown in Fig. 9 by the image correction unit 23.

The user holds his/her finger over the camera to perform biometric authentication. First, the biometric is captured and the finger detection process is performed as described above, and spectral processing is performed using the method described above to obtain a spectral image. next, each detected finger is converted into a finger ROI image. the finger ROI image is a rectangular cutout of the finger in accordance with the finger orientation, as described above. The finger angle and finger width are normalized, and the background information is filled in. Here, finger ROI image indoors 124 is detected from finger image indoors 121, and similarly, finger ROI image at the window 125 was cropped from the finger image at the window 122.

Next, three image sections of the finger ROI image are set up for each finger in the direction orthogonal to the center of the finger. The location of the three image sections is chosen to be the center of the finger, the midpoint of the finger tip and the finger center, and the midpoint of the finger base and the finger center. This allows us to see trends in the overall luminance profile of the finger while reducing the number of areas to be processed as much as possible. Here, the image sections of finger ROI image indoors 201a, 201b, 201c and the image sections of finger ROI image at the window 202a, 202b, 202c are set as shown in the figure.

Next, luminance profiles for each wavelength band of blue, green, and red are extracted for the three image cross sections set up above, and the average values of the luminance profiles for each wavelength band are calculated and aggregated into one average luminance profile for each wavelength band. The average slope angle of the average luminance profile for each wavelength band and the average luminance near the finger outline are then measured, and the maximum average slope angle that is the largest among the wavelength bands is obtained. The maximum average tilt angle is the angle with the largest tilt from a linear approximation of the luminance profile and determining the tilt from horizontal in each wavelength band. Figure 10 shows the maximum average cross-sectional luminance profile 205 plotted on the average image cross-sectional axis 203 for the indoor finger ROI image 124, resulting in the maximum average slope of the average cross-sectional luminance profiles calculated for the blue, green, and red wavelength bands. Fig. 10 also shows the maximum average tilt angle of the finger ROI image indoors207. Similarly, for the finger ROI image at the window 125, the maximum averaged cross -sectional luminance profile 206 is plotted on the averaged image cross-sectional axes 204. The maximum average tilt angle 208 is also shown. Since there are various cases where the wavelength of the ambient light is strong blue or strong red, it is effective to process each wavelength band separately and obtain the maximum value of each wavelength band. In the example shown in Fig. 10, it is assumed that the luminance gradient is caused by the light near the window during the daytime. In this case, the intensity in the blue wavelength band is enhanced, so the maximum averaged cross-sectional luminance profile 206 shown in the figure is for the blue wavelength band. Other wavelengths have weaker components and thus do not exhibit this level of sloping. Thus, using the maximum result from the wavelength range, if the luminance gradient is detected at each wavelength where the maximum intensity exceeds a predetermined threshold, the image can be judged to be affected by ambient light.

When the luminance gradient is caused by ambient light, the maximum average tilt angle becomes larger, and when the absolute value of the angle of luminance gradient is larger than a certain value, it is judged that ambient light is irradiating the image and guidance is given to the user. The direction of ambient light irradiation can be roughly estimated by the positive or negative tilt angle. The intensity and irradiation direction of ambient light determined to be affected by the image correction section 23 are displayed on the display section 15. For example, if the direction of the luminance gradient from horizontal to downward in Fig. 10 is a positive angle, it can be judged that strong light is irradiating from the upper side of the drawing. In general, the luminance gradient is affected by the direction of ambient light, so the user can take action to mitigate the effect of ambient light. Therefore, the user can act to mitigate the effects of ambient light by displaying on the display 15 that ambient light is irradiating from that direction. In general, since the luminance gradient is greatly affected by the direction of ambient light, only the direction of ambient light can be displayed, or the intensity can be displayed in conjunction with the direction of ambient light.

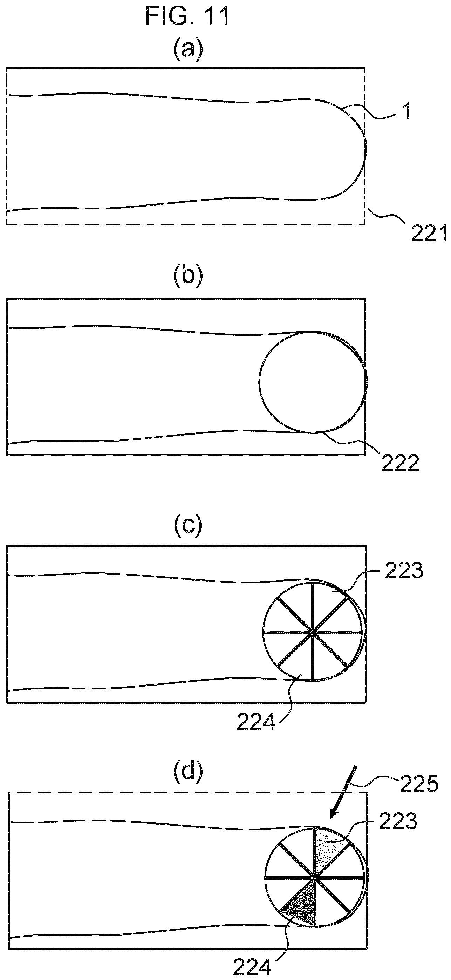

Fig.11 shows another example of estimating the irradiation direction of ambient light component using image correction unit 23. Figure 10 above shows a method for estimating the direction of external light illumination, but it could only determine the general direction, i.e., up or down. We now show a method to detect the direction of ambient light more accurately by measuring the brightness of the fingertip, taking advantage of the fact that the fingertip is a three-dimensional spherical surface.

First, as shown in Fig. 11(a), finger 1 including fingertips is observed in finger ROI image 221. The contour line near the fingertip generally forms a gentle semicircle. Therefore, the center and radius of the circle that best fits the contour line near the tip of the fingertip are obtained by, for example, Hough transform to obtain a circular region of fingertip 222, as shown in Fig. 11(b). This circular fingertip region is then divided into eight equal parts, for example, as shown in Fig. 11(C), and this is used as the fingertip segmentation area 223. The internal average luminance values for each segmented area are then calculated for each wavelength band of blue, green, and red. The wavelength band with the highest sum of all average luminance values is found to be the wavelength most affected by ambient light. The average luminance value of the interior of each segmented region is calculated for each wavelength band of blue, green, and red. The difference between the average luminance values obtained for the segmented region of fingertip 223 and the opposing segmented region 224 is then calculated for that wavelength band. For example, as shown in Fig. 11(D), if ambient light 225 is illuminated from the position shown in the figure, the average luminance of segmented region 223 tends to be high, while that of opposing segmented regions 224 is low because of shadows.

On the other hand, for the other segmented regions, the luminance difference from the segmented regions opposite each other is not so large. Therefore, when the luminance difference between all the segmented regions and the opposite segmented region is calculated, ambient light 225 can be determined to be located on the extended line of the segmented region with the largest luminance difference.

By using the above method, it is possible to determine that luminance gradient is generated by ambient light and the direction in which ambient light is irradiated.

In this example, the determination of ambient light intensity and the determination of ambient light direction were conducted separately. The determination of ambient light intensity should be conducted in the finger region where the biometric feature is actually extracted. On the other hand, since it is effective to use the three-dimensionally rounded fingertip region for ambient light direction detection, we decided to separate the two in this example.

The method for estimating the intensity and direction of ambient light can be implemented based on deep learning, for example, in addition to the directions described above. The training data is constructed by collecting a large number of biometric images that do not contain luminance gradients due to ambient light and biometric images that contain luminance gradients, and assigning correct labels to the images so that the presence or absence of luminance gradients due to ambient light and the direction of ambient light are clockwise from 0° to 360°. If there is no luminance gradient, it does not matter what is set as the external light direction. Then, the image information, the presence or absence of luminance gradient due to ambient light, and the direction of ambient light are input to a general CNN (convolutional deep neural network). The output is designed to have two pieces of information: the presence or absence of luminance gradient due to ambient light and the direction of ambient light. The given image information and labels are then learned to match the training data. However, when training images without luminance gradient due to ambient light, the mismatch in ambient light direction is not an issue and should not be included as a loss function during training.

This allows the user to obtain the presence or absence of ambient light and the direction of ambient light by inputting an arbitrary biomedical image. In particular, luminance gradients due to ambient light occur more frequently near windows, for example. By learning the direction of ambient light based on image features using CNN, it is possible to determine the direction of ambient light, including the image state of the surrounding environment where the image is taken as a clue, thus enabling more accurate determination.

Another method for estimating the direction of ambient light is to find the boundary line of shading that separates the bright and dark areas of the fingertip. The shading produced at the fingertips by ambient light is described above. Since the direction of the shadow boundary line changes smoothly depending on the direction of ambient light, it is possible to determine the direction of this line and determine the presence of a light source in the direction orthogonal to it. As an example of a specific method for obtaining the boundary line of shading, first obtain a circle that fits the fingertip as described above, and then bisect the circle with a straight line at an arbitrary angle passing through the center of the circle. Then, the average luminance of one-half circle area and the average luminance of the other half circle area are determined and the difference between the two is calculated, and the angle of the straight line when the absolute value of the above difference is the maximum when the angle is varied. Since this angle corresponds to the angle of the shading boundary, it can be determined that there is ambient light in the direction orthogonal to this direction and in the direction of the bright area in the semicircular region described above. This method is more robust than the method described above, even with fine angle adjustment, and thus can detect the direction of ambient light more accurately.

If only the position of sunlight near a window is to be estimated, it is possible to determine the direction of the sun without using image information by using, for example, GPS, magnetic sensors, acceleration sensors, gyro sensors, and time information installed in smartphones. This allows the occurrence of luminance slopes due to sunlight to be detected and guides the user. In addition, the system can determine the possibility of backlighting, in which the subject is blacked out because the background is too bright, thus preventing image quality degradation due to backlighting.

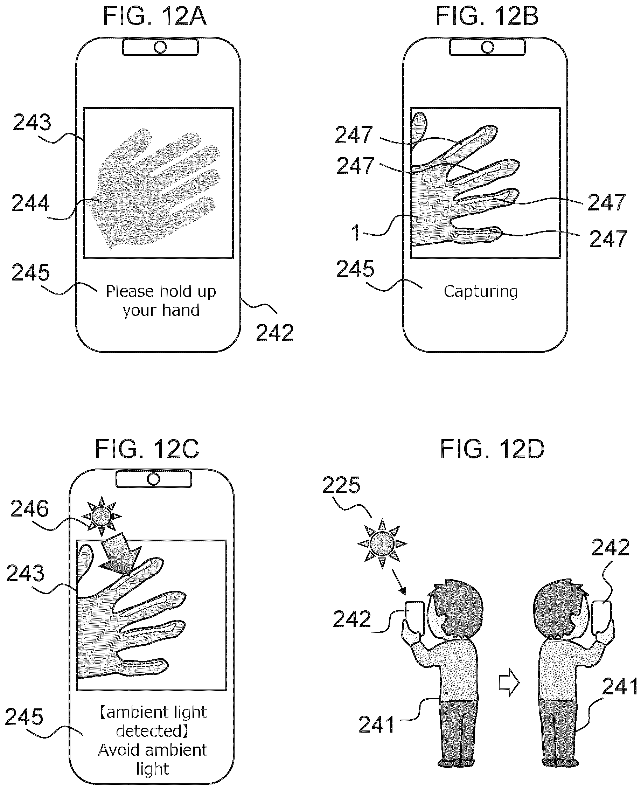

Fig. 12A, Fig. 12B, Fig. 12C, and Fig. 12D show examples of guidance when ambient light is detected during authentication. As shown in Figure 12a, when biometric authentication is started, a camera image 243 and a finger guide 244 are superimposed on the screen of the smartphone 242, and "Please hold up your hand" is displayed on the guidance display 245 to guide the user to hold up his or her finger. When the user projects his/her fingers 1 onto the camera, the biometric capture and authentication process is started as shown in the example above. As shown in Figure 12b, the guidance display 245 shows a message that authentication is being performed, for example, "Filming is in progress." At this time, if ambient light is irradiated from the upper left of the drawing, a luminance gradient 247 caused by ambient light is generated on the finger 1, and if no special measures are taken, the authentication accuracy will deteriorate. Therefore, the method shown in Fig. 10 and Fig. 11 is used to determine whether or not the luminance gradient is caused by ambient light irradiation. If a luminance gradient is detected, the direction of the gradient is detected and the fact that ambient light was detected, and its irradiation direction are displayed to the user. For example, as shown in Fig. 12C, the ambient light mark 246 is displayed so that it overlaps the display of the camera image 243.

In this example, the sun symbol and an arrow are displayed to indicate the presence and direction of ambient light. The guidance display unit 245 displays text such as "ambient light detected, please avoid ambient light" or "ambient light is shining from the direction of the arrow". In response to this, user 241 recognizes the presence of ambient light 225, which is detrimental to authentication, as shown in Fig. 12D. This allows the user to authenticate in an appropriate environment by turning his/her back to outside light 225 and capturing biometrics or moving to a location with no outside light. As a result, it is possible to achieve highly accurate authentication without being affected by ambient light.

As a variation of luminance gradient or uneven luminance for biometrics, a shadow of ambient light may be projected on biometrics to be captured. Shadows may occur, for example, in the case of a light/dark pattern caused by blinds hung near a window as described above, or when the user's own or a smartphone is partially blocking outside light. To detect such shadows, the distribution of luminance values in the finger interior region of the finger ROI image described above can be acquired, and its variance can be calculated to determine if it exceeds a predetermined value. If this variance is larger than a certain value, it means that bright and dark regions are distributed inside the finger region, and it can be judged that a luminance gradient or uneven luminance is occurring. When this condition is detected, a guidance message such as "Shadows are detected, please move away from ambient light," for example, can be displayed to ask the user to change the capturing environment.

The invention is not limited to the above examples but includes various variations. For example, the above examples are described in detail for a better understanding of the invention and are not necessarily limited to those with all the described configurations. It is also possible to replace some of the configurations of one example with those of another example, to add configurations of another example to those of one example, and to add, delete, or replace some of the configurations of each example with those of another example.

REFERENCE SIGNS LIST

1 fingers
2 input device
3 light source
9 camera
10 authentication processing device

11 central processing unit
12 memory
13 interface
14 storage device
15 display unit
16 input unit
17 speaker
18 image input unit
20 registration processing unit
21 authentication processing unit
22 imaging control unit
23 Image correction unit
24 feature extraction unit
25 matching processing unit
26 authentication decision unit
27 biometric information processing unit
121 finger image indoors
122 finger image at the window
123 finger image with shading
124 finger ROI image indoors
125 finger ROI image at the window
126 finger vein pattern from finger images indoors
161 light sensitivity characteristics of element B
162 light sensitivity characteristics of element G
163 light sensitivity characteristics of element R
164 blue wavelength band
165 green wavelength band
166 red wavelength band
167 average of the light sensitivity characteristics of element B in the blue wavelength band
201a image section of finger ROI image indoors
201b image section of finger ROI image indoors
201c image section of finger ROI image indoors
202a image section of finger ROI image at the window
202b image section of finger ROI image at the window
202c image section of finger ROI image at the window
203 averaged image cross-sectional axes of luminance profiles indoors
204 averaged image cross-sectional axes of luminance profiles at the window
205 maximum averaged cross-sectional luminance profile of averaged image cross-sectional axes indoors
206 maximum averaged cross-sectional luminance profile of averaged image cross-sectional axes at the window
207 maximum average tilt angle of the finger ROI image indoors
208 maximum average tilt angle of the finger ROI image at the window
221 finger ROI image
222 region of fingertip
223 segmented region of fingertip
224 opposing segmented regions
225 ambient light
241 user
242 smart phone
243 camera image
244 finger guide
245 guidance display unit
246 ambient light mark
247 luminance gradient due to ambient light
1000 biometric authentication system
282 cross section of image
283 cross-sectional luminance profile of the image
284 biometric contrast detection probe
285 biometric feature-enhanced image

286 joint wrinkles

**Claims**

1. A biometric authentication system comprising:

   a storage device that stores biometric features,
   an imaging device for capturing biometrics,
   an image correction unit that converts the image quality of the image captured by the imaging device, and
   an authentication processing unit that performs biometric authentication using the image output by the image correction unit,
   wherein the image correction unit
   generates an image before color correction of one or more images in which biometrics is captured,
   transforms the pre-color correction image by a plurality of values within a predetermined search range for color information to generate a plurality of color information transformed images,
   selects a color information conversion image that best represents the biometric feature for each biometric feature from the plurality of color information conversion images, and
   searches the optimal color information for each biometric feature based on the color information to obtain the selected color information conversion image.

2. The biometric authentication system according to claim 1, wherein
   the image correction unit generates the pre-color-corrected image by Generative Adversarial Network from a plurality of images captured by the imaging device.

3. The biometric authentication system according to claim 2, wherein
   the image correction unit searches the optimal color information for each biometric feature by narrowing the search range based on the color information to obtain the selected color information conversion image.

4. The biometric authentication system according to claim **3**, wherein

   the image correction unit
   calculates matching score of the biometric feature by matching the same finger and another finger in the color information conversion image, and
   searches the color information of the color information conversion image in which the matching score of the same finger and the matching score of another finger are most separated for as the optimal value.

5. The biometric authentication system according to claim **3**, wherein
   the image correction unit searches the color information that maximizes the evaluated value of the contrast of the biometric information in the color information conversion image as the optimal value.

6. The biometric authentication system according to claim **3**, wherein
   the image correction unit converts the color information by converting the color temperature.

7. The biometric authentication system according to claim **3**, wherein
   the image correction unit converts the color information by converting the hue.

8. The biometric authentication system according to claim **3**, wherein
   the image correction unit corrects luminance gradient caused by non-biometric features in the image.

9. The biometric authentication system according to claim **3**, wherein
   the image correction unit estimates the average intensity of multiple wavelength bands in the image before color correction.

10. The biometric authentication system according to claim **3**, wherein

    The image correction unit
    changes the hue for the image of the average intensity of multiple wavelength bands in the image before color correction,

calculates the degree of difference between the image in the first wavelength band and the image in the second wavelength band, and the degree of difference between the image in the first wavelength band and the image in the third wavelength band,

calculates the sum of the two acquired degrees of difference, and

selects the hue that maximizes the sum of the degree of differences as the optimal value.

11. The biometric authentication system according to claim 3, further comprising:

a display unit,

wherein the image correction unit

calculates the direction of ambient light irradiated to biometrics being captured by the imaging device, and displays the direction of the ambient light on the display unit.

12. The biometric authentication system according to claim 11, wherein

the image correction unit

calculates the intensity of ambient light irradiated to biometrics being captured by the imaging device, and displays the presence or absence of ambient light and the direction of ambient light on the display unit.

13. A biometric authentication method by a biometric authentication system comprising:

a storage device that stores biometric features,

an imaging device for capturing biometrics,

an image correction unit that converts the image quality of the image captured by the imaging device, and an authentication processing unit that performs biometric authentication using the image output by the image correction unit,

wherein the image correction unit

generates an image before color correction of one or more images in which biometrics is captured,

transforms the pre-color correction image by a plurality of values within a predetermined search range for color information to generate a plurality of color information transformed images,

selects the color information conversion image that best represents the biometric feature for each biometric feature from the plurality of color information conversion images, and

searches the optimal color information for each biometric feature based on the color information to obtain the selected color information conversion image.

FIG. 1A

1000

3

9

2

1

image input unit

18

13

12

memory

IF

IF

IF

13

16

13 13

17

10

13 13

IF

IF

CPU

IF

11

13

15

display unit

14

storage device

## FIG. 1B

| | |
|---|---|
| 20 — registration processing unit | authentication processing unit — 21 |
| 22 — imaging control unit | Image correction unit — 23 |
| 24 — feature extraction unit | matching processing unit — 25 |
| 26 — authentication decision unit | |

12

27

## FIG. 2

```
                        ( Authentication starts )
                                  │
S201 ⌇  ┌──────────────────────────────────────────────────┐ ◄──┐
        │  Capturing biometrics with multiple white balance values │  │
        └──────────────────────────────────────────────────┘   │
                                  │                              │
S202 ⌇  ┌──────────────────────────────────────────────────┐   │
        │  Estimation and generation of images before color correction │  │
        └──────────────────────────────────────────────────┘   │
                                  │                              │
S203 ⌇  ┌──────────────────────────────────────────────────┐   │
        │ Search for optimal color temperature for each biometric feature │ │
        └──────────────────────────────────────────────────┘   │
                                  │                              │
S204 ⌇  ┌──────────────────────────────────────────────────┐   │
        │            Acquisition of each biometric feature         │  │
        └──────────────────────────────────────────────────┘   │
                                  │                              │
S205 ⌇  ┌──────────────────────────────────────────────────┐   │
        │   Final Matching Score←Minimum fusion matching score    │  │
        │              for each biometric feature                 │  │
        └──────────────────────────────────────────────────┘   │
                                  │                              │
                                                          Y      │
S206 ⌇  ◄────── Final match score below authentication threshold? ──────►  │
                                  │ N                            │
                                                          N      │
S207 ⌇  ◄──────────────── Timeout? ─────────────────────►──────┘
                                  │ Y
S208 ⌇  ┌──────────────────────────────────────────────────┐
        │               Authentication failure                 │
        └──────────────────────────────────────────────────┘
                                  │
S209 ⌇  ┌──────────────────────────────────────────────────┐ ◄──
        │           Perform authentication process             │
        └──────────────────────────────────────────────────┘
                                  │
                        ( End of authentication )
```

FIG. 3A

FIG. 3B

# FIG. 4

```
( start )
```

**S401** — Detection of each finger on the image before color correction

**S402** — Color temperature initialization:.
Lower limit = 2000K, Upper limit = 7000K,
Median = (Upper limit + Lower limit)/2

**S403** — Image 1←Color temperature conversion to lower limit
Image 2← Color temperature conversion to median
Image 3← Color temperature conversion to upper limit

**S404** — Image 4 ← Noise assignment to Image 1
Image 5←Noise added to Image 2
Image 6←Noise added to Image 3

**S405** — Feature extraction of finger veins for each finger for images 1~6

**S406** — Matching Score Group 1 ← Match against Image 1 and Image 4
Matching Score Group 2← Match against Image 2 and Image 5
Matching Score Group 3← Match against Image 3 and Image 6

**S407** — Transform each set of matching scores
so that each other distribution is standardized

**S408** — Optimal value←Color temperature that results
in the highest separation score group obtained so far
Search range←(upper limit-lower limit)/2

**S409** — Search range <threshold?  **Y**

**S410** — Lower limit←optimal value-search range/2
Upper limit←optimal value + search range/2
Median←(upper limit + lower limit)/2

**S411** — If lower limit < lower limit initial value,
add the difference to lower limit, median, and upper limit
If upper limit > upper limit initial value,
subtract the difference from lower limit, median, and upper limit

**S412** — Optimal color temperature←Optimal value

```
( end )
```

# FIG. 5

## (a)

Lower limit
(2000K)

Median
(4500K)

Upper limit
(7000K)

Color
temperature

Search range (5000)

## (b)

Lower limit

Median

Upper limit

Impostor
score

Genuine
score

Impostor
score

Genuine
score

Impostor
score

Genuine
score

Search range (5000)

## (c)

Median
(3250K)

Lower limit

Upper limit

Search range (2500)

## (d)

Lower limit
(2625K)

Median

Upper limit
(3875K)

optimum value

Search range (1250)

FIG. 6A

FIG. 6B

FIG. 6C

121  122  123

121  122  121  123

FIG. 6D

124  125  126  125

# FIG. 7

Authentication starts

S701 — Capturing biometrics with multiple white balance values

S702 — Estimation and generation of images before color correction

S703 — Spectral processing

S704 — Hue transformation suitable for capturing each biometric feature

S705 — Acquisition of each biometric feature

S706 — Matching of each biometric feature

S707 — Matching score below authentication threshold?   Y

S708 — Timeout?   N

S709 — Authentication failure

S710 — Perform authentication process

End of authentication

# FIG. 8

## FIG. 9

```
                    ┌─────────────────────────┐
                    │   Authentication starts │
                    └─────────────────────────┘
                                 │
S901 ──┐  ┌──────────────────────────────────────────────────┐
       └──│   Hold up the finger while aligning it with the guide │
          └──────────────────────────────────────────────────┘
                                 │
S902 ──┐  ┌──────────────────────────────────────────────────┐
       └──│ Processing of capturing biometrics and finger area detection │◄──
          └──────────────────────────────────────────────────┘
                                 │
S903 ──┐  ┌──────────────────────────────────────────────────┐
       └──│              Spectral processing                  │
          └──────────────────────────────────────────────────┘
                                 │
S904 ──┐  ┌──────────────────────────────────────────────────┐
       └──│   Detection processing of ambient light component  │
          │      and estimation of irradiation direction       │
          └──────────────────────────────────────────────────┘  N
                                 │
S905 ──┐  ┌──────────────────────────────────────────────────┐
       └──│      Ambient light component available?            │───
          └──────────────────────────────────────────────────┘
                                 │ Y
S906 ──┐  ┌──────────────────────────────────────────────────┐
       └──│        Display guidance on ambient light           │
          └──────────────────────────────────────────────────┘
                                 │
S907 ──┐  ┌──────────────────────────────────────────────────┐
       └──│      Extraction process of biometric features      │
          └──────────────────────────────────────────────────┘
                                 │
S908 ──┐  ┌──────────────────────────────────────────────────┐
       └──│        Biometric feature matching process          │
          └──────────────────────────────────────────────────┘
                                 │                              Y
S909 ──┐  ┌──────────────────────────────────────────────────┐
       └──│   Matching score below authentication threshold?   │───
          └──────────────────────────────────────────────────┘
                                 │ N                            N
S910 ──┐  ┌──────────────────────────────────────────────────┐
       └──│                  Timeout ?                         │───
          └──────────────────────────────────────────────────┘
                                 │ Y
S911 ──┐  ┌──────────────────────────────────────────────────┐
       └──│             Authentication failure                 │
          └──────────────────────────────────────────────────┘
                                 │
S912 ──┐  ┌──────────────────────────────────────────────────┐
       └──│          Perform authentication process            │
          └──────────────────────────────────────────────────┘
                                 │
                    ┌─────────────────────────┐
                    │    End of authentication │
                    └─────────────────────────┘
```

FIG. 10

## FIG. 11

### (a)

### (b)

### (c)

### (d)

## FIG. 12A

243

244

245

Please hold up
your hand

242

## FIG. 12B

247
247

1

247

247

245

Capturing

## FIG. 12C

246

243

245

【ambient light
detected】
Avoid ambient
light

## FIG. 12D

225

242

242

241

241

# FIG. 13

```
start
```

S1301 — Detection of each finger on the image before color correction

S1302 —
Hue initialization:
Lower limit = 2000K, Upper limit = 7000K,
Median = (Upper limit + Lower limit)/2

S1303 —
Image 1← Hue conversion to lower limit
Image 2← Hue transformation to median
Image 3← Hue transformation to upper limit

S1304 —
Evaluation value 1←Measurement of biometric contrast for image 1
Evaluation value 2←Measurement of biometric contrast for image 2
Evaluation value 3←Measurement of biometric contrast for image 3

S1305 —
Optimal value← Hue with the largest value
among the evaluated values 1~3
Search range←(upper-lower limit)/2

S1306 — Search range <threshold?  Y

N

S1307 —
Lower limit←optimal value-search range/2
Upper limit←optimal value + search range/2
Median←(upper limit + lower limit)/2

S1308 —
If lower limit < lower limit initial value,
add the difference to lower limit, median, and upper limit
If upper limit > upper limit initial value,
subtract the difference from lower limit, median, and upper limit

S1309 — Optimal hue←Optimal value

```
end
```

# FIG. 14A

286 281 286      286 281 286

Image 1
(hue of lower limit)

221    286 281 286     285

Image 2
(hue of median)

221    286 281 286     285

Image 3
(hue of upper limit)

221           285

# FIG. 14B

282       281

286

pixel value   281    281

283

284      282

284   284

## INTERNATIONAL SEARCH REPORT

| International application No. |
| --- |
| **PCT/JP2023/002371** |

**A. CLASSIFICATION OF SUBJECT MATTER**

*G06T 7/00*(2017.01)i; *G06V 40/12*(2022.01)i

FI: G06V40/12; G06T7/00 530; G06T7/00 510E

According to International Patent Classification (IPC) or to both national classification and IPC

**B. FIELDS SEARCHED**

Minimum documentation searched (classification system followed by classification symbols)

G06T7/00; G06V40/12

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2020-184331 A (SAMSUNG ELECTRONICS CO., LTD.) 12 November 2020 (2020-11-12) <br> paragraphs [0081]-[0090], fig. 5 | 1-13 |
| A | JP 2022-32529 A (SOFTBANK CORP.) 25 February 2022 (2022-02-25) <br> paragraphs [0108]-[0116], fig. 4 | 1-13 |

☐ Further documents are listed in the continuation of Box C.  ☑ See patent family annex.

| | |
| --- | --- |
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
| --- | --- |
| **11 April 2023** | **18 April 2023** |

| Name and mailing address of the ISA/JP | Authorized officer |
| --- | --- |
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

<table>
<tr><td colspan="2" align="center">INTERNATIONAL SEARCH REPORT<br>Information on patent family members</td><td colspan="2">International application No.<br>PCT/JP2023/002371</td></tr>
<tr><td align="center">Patent document<br>cited in search report</td><td align="center">Publication date<br>(day/month/year)</td><td align="center">Patent family member(s)</td><td align="center">Publication date<br>(day/month/year)</td></tr>
<tr><td>JP 2020-184331 A</td><td>12 November 2020</td><td>US 2020/0349372 A1<br>paragraphs [0119]-[0128], fig.<br>5<br>EP 3734503 A1<br>KR 10-2020-0127818 A<br>CN 111881429 A</td><td></td></tr>
<tr><td>JP 2022-32529 A</td><td>25 February 2022</td><td>(Family: none)</td><td></td></tr>
</table>

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2018180660 A